# EUROPEAN PATENT SPECIFICATION

(11) **EP 2 514 844 B1**
(45) Date of publication and mention of the grant of the patent: **23.09.2015**
(21) Application number: 12164687.1
(22) Date of filing: 19.04.2012
(51) Int. Cl.: C21D 1/06, C21D 9/36, C22C 38/02, C22C 38/04, C22C 38/40, C22C 38/44, C23C 8/22, C23C 8/80, F16C 33/14, F16C 33/62, F16C 33/64, C21D 9/40, C21D 1/25

(54) **Rolling sliding member, method of manufacturing the same, and rolling bearing**
Wälz-Gleitelement, Herstellungsverfahren dafür und Wälzlager
Element roulant et glissant , son procédé de fabrication et palier à roulement

(30) Priority: 22.04.2011 JP 2011095817
(43) Date of publication of application: 24.10.2012
(73) Proprietor: JTEKT CORPORATION, Osaka-shi Osaka 542-8502 (JP)
(72) Inventor: Kizawa, Katsuhiko, Osaka-shi, Osaka 542-8502 (JP); Yoshida, Wataru, Osaka-shi, Osaka 542-8502 (JP)
(74) Representative: Winter, Brandl, Fürniss, Hübner, Röss, Kaiser, Polte - Partnerschaft mbB

(56) References cited:
- EP-A1- 1 355 071
- EP-A1- 1 512 761
- EP-A1- 1 517 058
- EP-A2- 1 099 869
- JP-A- H0 625 823
- JP-A- H11 199 983
- JP-A- 2000 239 747
- JP-A- 2006 097 096
- JP-A- 2010 043 320
- JP-A- 2010 196 107

## Description

### BACKGROUND OF THE INVENTION

### 1. Field of the Invention

The invention relates to a rolling sliding member, a method of manufacturing the same, and a rolling bearing as defined in the claims.

### 2. Description of Related Art

Large-sized bearing parts used in, for example, industrial machines, need to be made of material having high hardenability, such as JIS SNCM case hardened steel, to ensure a required strength. In addition, for example, a bearing for a rolling mill in steel-making equipment is required to have sufficient crack resistance against, for example, impact load. Therefore, such a bearing is made of JIS SNCM case hardened steel. The JIS SNCM case hardened steel has high hardenability, is able to ensure a surface hardness higher than or equal to 58HRC, and is subjected to carburizing by which the internal hardness is reduced to 25 to 50HRC to achieve sufficient crack resistance. In addition, in recent years, demands for large-sized bearing parts having a longer useful life have been increasingly growing. In such a circumstance, an attempt to improve a rolling fatigue life is made by adding elements, such as silicon, nickel, chromium and molybdenum (for example, see Japanese Patent Application Publication No. 2007-77422 (JP 2007-77422 A) and Japanese Patent Application Publication No. 2005-154784 (JP 2005-154784 A)).

However, the above-described steel material contains large amounts of nickel, molybdenum, and the like, that are rare metals. Therefore, the steel material is expensive, which increases the cost of manufacturing rolling bearings.

For example, if bearing parts are used in some types of rolling mills, rust may be formed on the bearing parts due to entry of rolling water. The rust reduces the rolling fatigue life of bearing parts. If steel material that contains neither nickel nor molybdenum is used, the crack resistance of bearing parts tends to be lower. Therefore, there have been growing demands for development of bearing parts that are manufactured at low cost, that have excellent corrosion resistance and crack resistance, and that have a sufficiently long useful life.

JP 11-199983 A discloses a steel for rolling element having improved rolling fatigue characteristics and prolonged service life.

### SUMMARY OF THE INVENTION

It is an object of the invention to provide a rolling sliding member that is manufactured at low cost, that has excellent corrosion resistance and crack resistance, and that has sufficiently long useful life, a method of manufacturing the rolling sliding member, and a rolling bearing.

An aspect of the invention relates to a rolling sliding member made of a base material that is a steel material consisting of 0.16 to 0.19% of carbon by mass, 0.15 to 0.55% of silicon by mass, 0.20 to 1.55% of manganese by mass, 2.4 to 3.2% of chromium by mass, 0.01 to 0.2% of nickel by mass higher than or equal to 0.001 % and lower than 0.1% of molybdenum by mass, and the balance of less than or equal to 97.079% of iron by mass and incidental impurities, and which has a hardenability index of higher than or equal to 5.4, the hardenability index being expressed by Formula (I):

X_{C}●X_{Si}●X_{Mn}●X_{Cr}●X_{Ni}●X_{Mo} (I)

wherein X_{C} is 0.5346 × carbon content (mass%) + 0.0004, X_{Si} is 0.7xsilicon content (mass%), X_{Mn} when a manganese content is higher than or equal to 0.20% by mass and
lower than 1.25% by mass is 3.3844 × manganese content (mass%) + 0.9826, X_{Mn} when a manganese content is higher than or equal to 1.25% by mass and lower than or equal to 1.55% by mass is 5.1 × manganese content (mass%) - 1.12, X_{Cr} is 2.1596 × chromium content (mass%) + 1.0003, X_{Ni} is 0.382 × nickel content (mass%) + 0.99, and X_{Mo} is 3 × molybdenum content (mass%) + 1, the base material being subjected to carburizing to achieve an effective case depth of 1.5 to 8 mm. The rolling sliding member has a rolling sliding surface that is in at least one of rolling contact and sliding contact relative to an opposed member. A carbon content in a surface layer in a range from a surface of the rolling sliding surface to a depth of 0.05 mm is 0.8 to 1.2% by mass, a Vickers hardness at a position at a depth of 0.1 mm from the surface of the rolling sliding surface is 700 to 840, an amount of retained austenite at a position at a depth of 0.1 mm from the surface of the rolling sliding surface is 20 to 40 % by volume, an area ratio of carbide at a position at a depth of 0.03 mm from the surface of the rolling sliding surface is 1.5 to 8 %, a Vickers hardness of the portion that is located at the center, in the axially longitudinal direction, of the portion at which the rolling sliding surface is formed and that is located at a center, in the thickness direction, of the portion at which the rolling sliding surface is formed is 300 to 510, and a martensitic transformation ratio of the portion that is located at the center, in the axially longitudinal direction, of the portion at which the rolling sliding surface is formed and that is located at the center, in the thickness direction, of the portion at which the rolling sliding surface is formed is 50 to 100 %.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a sectional view of main portions of a four-row tapered roller bearing device that serves as a rolling bearing that includes rolling sliding members according to an embodiment of the invention;
FIG. 2 is a process chart that shows a method of manufacturing an outer ring that is one of the rolling sliding members according to the embodiment of the invention;
FIG. 3 is a diagram that shows heat treatment conditions (Conditions (A) shown in Table 1) in first to seventh examples;
FIG. 4 is a diagram that shows heat treatment conditions (Conditions (B) shown in Table 2) in a first comparative example;
FIG. 5 is a diagram that shows heat treatment conditions (Conditions (C) shown in Table 2) in a second comparative example;
FIG. 6 is a diagram that shows heat treatment conditions (Conditions (D) shown in Table 2) in third and fourth comparative examples;
FIG. 7 is a diagram that shows heat treatment conditions (Conditions (E) shown in Table 2) in fifth and sixth comparative examples;
FIG. 8 is a diagram that shows heat treatment conditions (Conditions (F) shown in Table 2) in seventh to ninth comparative examples;
FIG. 9A is a front view of main portions of a testing machine used to evaluate a useful life in a first test example;
FIG. 9B is a side view of the main portions of the testing machine;
FIG. 10 is a diagram that shows heat treatment conditions in a second test example;
FIG. 11 is a diagram that shows heat treatment conditions in the second test example;
FIG. 12 is a diagram that shows heat treatment conditions in the second test example;
FIG. 13 is a diagram that shows heat treatment conditions in the second test example;
FIG. 14 is a diagram that shows heat treatment conditions in the second test example;
FIG. 15 is a diagram that shows heat treatment conditions in the second test example;
FIG. 16 is a graph that shows the results of studies on the correlation between an oxygen partial pressure and a surface carbon content in the case where a steel material A was used, obtained in the second test example;
FIG. 17 is a graph that shows the results of studies on the correlation between an oxygen partial pressure and a surface carbon content in the case where a steel material B was used, obtained in the second test example;
FIG. 18 is a graph that shows the results of studies on the correlation between an oxygen partial pressure and a surface carbon content in the case where a steel material C was used, obtained in the second test example; and
FIG. 19 is a graph that shows the results of studies on the correlation between an oxygen partial pressure and a surface carbon content in the case where a steel material D was used, obtained in the second test example.

### DETAILED DESCRIPTION OF EMBODIMENTS

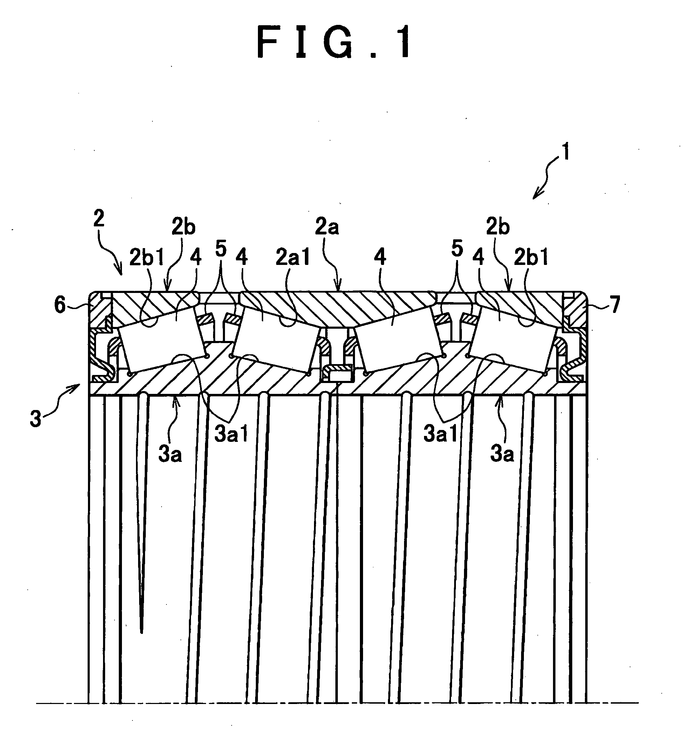

Hereafter, rolling sliding members (an outer ring member, an inner ring member and rolling elements) according to an embodiment of the invention will be described with reference to the accompanying drawings. FIG. 1 is a sectional view of main portions of a four-row tapered roller bearing device 1 that serves as a rolling bearing that includes the rolling sliding members according to the embodiment of the invention.

The four-row tapered roller bearing device 1 shown in FIG. 1 is installed at a roll neck (not shown) at each end of each roll for a rolling mill, and supports the roll such that the roll is rotatable. The four-row tapered roller bearing device 1 includes an outer ring 2, an inner ring 3, tapered rollers 4, annular cages 5 and a pair of sealing devices 6 and 7. The outer ring 2 is fixedly fitted to an inner periphery of a housing (not shown) provided for the rolling mill. The inner ring 3 is concentrically arranged radially inward of the outer ring 2. The tapered rollers 4 are a plurality of rolling elements that are arranged between the outer ring 2 and the inner ring 3. The cages 5 retain the tapered rollers 4 at predetermined intervals in the circumferential direction. The sealing devices 6 and 7 form an annular sealed space between the outer ring 2 and the inner ring 3.

The inner ring 3 is a rotary ring that rotates together with the roll of the rolling mill. The inner ring 3 is formed of a pair of cylindrical inner ring members 3a that are arranged next to each other in the axial direction. A pair of inner ring raceway surfaces 3a1 is formed on an outer peripheral surface of each inner ring member 3a. The tapered rollers 4 roll on the inner ring raceway surfaces 3a1. The roll neck is fixedly fitted to an inner peripheral surface of the inner ring 3.

The outer ring 2 is a fixed ring that is fixedly fitted to the inner periphery of the housing of the rolling mill. The outer ring 2 is formed of a cylindrical first outer ring member 2a and a pair of cylindrical second outer ring members 2b. The first outer ring member 2a is arranged at an axial center of the four-row tapered roller bearing device 1. The second outer ring members 2b are arranged at respective axial ends of the first outer ring member 2a. The first outer ring member 2a and the second outer ring members 2b are arranged next to each other in the axial direction. A pair of outer ring raceway surfaces 2a1 is formed on an inner peripheral surface of the first outer ring member 2a. The tapered rollers 4 roll on the outer ring raceway surfaces 2a1. The outer ring raceway surfaces 2a1 face inner ring raceway surfaces 3a1 that are formed at axially inner side portions of the inner ring members 3a. Outer ring raceway surfaces 2b1 are formed on inner peripheral surfaces of the second outer ring members 2b. The tapered rollers 4 roll on the outer ring raceway surfaces 2b1. The outer ring raceway surfaces 2b1 face the inner ring raceway surfaces 3a1 that are formed at axially outer side portions of the inner ring members 3a.

The tapered rollers 4 are rollably arranged between the inner ring raceway surfaces 3a1 and the outer ring raceway surfaces 2a1, and between the inner ring raceway surfaces 3a1 and the outer ring raceway surfaces 2b1. In addition, in the four-row tapered roller bearing device 1 according to the present embodiment, the tapered rollers 4 are arranged in four rows aligned in the axial direction.

The sealing device 6 is arranged at one axial end portion of the four-row tapered roller bearing device 1. The sealing device 6 seals an opening, on one side in the axial direction, between the outer ring 2 and the inner ring 3. In addition, the sealing device 7 is arranged at the other axial end portion of the four-row tapered roller bearing device 1. The sealing device 7 seals an opening, on the other side in the axial direction, between the outer ring 2 and the inner ring 3.

The outer ring 2, the inner ring 3, and the tapered rollers 4 are all made of the following steel material. The steel material consists of 0.16 to 0.19% of carbon by mass, 0.15 to 0.55% of silicon by mass, 0.20 to 1.55% of manganese by mass, 2.4 to 3.2% of chromium by mass 0.01 to 0.2% of nickel by mass, higher than or equal to 0.001% and lower than 0.1% of molybdenum by mass and the balance of less than or equal to 97.079% of iron by mass and incidental impurities. A hardenability index of steel material is expressed by Formula (I):

X_{C}●X_{Si}●X_{Mn}●X_{Cr}●X_{Ni}●X_{Mo} Formula (I)

In Formula (I), X_{C} is 0.5346 × carbon content (mass%) + 0.0004. X_{Si} is 0.7 × silicon content (mass%). X_{Mn} in the case where the manganese content is higher than or equal to 0.20% by mass and is lower than 1.25% by mass is 3.3844 × manganese content (mass%) + 0.9826. X_{Mn} in the case where the manganese content is higher than or equal to 1.25% by mass and lower than or equal to 1.55% by mass is 5.1 × manganese content (mass%) - 1.12. X_{Cr} is 2.1596 × chromium content (mass%) + 1.0003. X_{Ni} is 0.382 × nickel content (mass%) + 0.99. X_{Mo} is 3 × molybdenum content (mass%) +1. A steel material having a hardenability index, expressed by Formula (I), of higher than or equal to 5.4 is subjected to carburizing such that an effective case depth after carburizing is 1.5 to 8 mm.

The carbon content in the steel material is higher than or equal to 0.16% by mass from the viewpoint of suppressing carburizing cost and ensuring sufficient toughness, and is lower than or equal to 0.19% by mass from the viewpoint of setting the martensite hardness within a predetermined range and ensuring sufficient internal toughness. The chromium content in the steel material is higher than or equal to 2.4% by mass from the viewpoint of ensuring sufficient rolling fatigue life and rust resistance, and is lower than or equal to 3.2% by mass from the viewpoint of ensuring sufficient heat treatment characteristic (long-time carburizing characteristic) during manufacturing and suppressing reduction in useful life due to formation of massive carbides. As described above, the steel material contains 2.4 to 3.2% of chromium by mass. Therefore, when such a steel material is used, it is possible to ensure sufficient rust resistance even if large amounts of nickel and molybdenum that are usually used to improve the rust resistance of steel material are not added. The silicon content in the steel material is higher than or equal to 0.15% by mass from the viewpoint of ensuring sufficient rolling fatigue life, and is lower than or equal to 0.55% by mass, desirably, lower than or equal to 0.35% by mass, from the viewpoint of ensuring sufficient heat treatment characteristic (long-time carburizing characteristic). The manganese content in the steel material is higher than or equal to 0.20% by mass from the viewpoint of obtaining deoxidation or desulfurization effect at the time of forming an ingot steel material, and is lower than or equal to 1.55% by mass from the viewpoint of ensuring sufficient grain boundary strength and sufficient internal toughness at a quenched portion inside the steel material. The nickel content in the steel material is lower than or equal to 0.2% by mass from the viewpoint of reducing material cost. The lower limit of the nickel content in the steel material is 0.01 % by mass. The molybdenum content in the steel material is lower than 0.1 % by mass, desirably, equal to or lower than 0.03% by mass, from the viewpoint of reducing material cost. The lower limit of the molybdenum content in the steel material is 0.001 % by mass.

The steel material has a hardenability index higher than or equal to 5.4. The hardenability index is higher than or equal to 5.4 from the viewpoint of ensuring sufficient toughness, and is lower than or equal to 9.0 from the viewpoint of reducing material cost and manufacturing cost. Note that Formula (I) is derived on the basis of ASTM A255-02.

The carbon content in a surface layer, within a range from a surface (hereinafter, referred to as "surface of a rolling sliding surface") to a depth of 0.05 mm, of each of the outer ring raceway surfaces 2a1 of the first outer ring member 2a that constitutes the outer ring 2, the outer ring raceway surfaces 2b1 of the second outer ring members 2b that constitute the outer ring 2, the inner ring raceway surfaces 3a1 of the inner ring members 3a that constitute the inner ring 3, and the rolling contact surfaces of the tapered rollers 4 is higher than or equal to 0.8% by mass from the viewpoint of ensuring a predetermined hardness, and is lower than or equal to 1.2% by mass from the viewpoint of ensuring a predetermined carbide area ratio. Note that, in this specification, the "surface layer within a range from a surface to a depth of 0.05 mm" means a range from a surface of each rolling sliding surface to a position at a depth of 0.05 mm from the surface of the rolling sliding surface.

The Vickers hardness at a position at a depth of 0.1 mm from a surface of each rolling sliding surface is higher than or equal to 700 (Rockwell C-scale hardness of 60) from the viewpoint of ensuring sufficient rolling fatigue life, and is lower than or equal to 840 (Rockwell C-scale hardness of 65.3) from the viewpoint of ensuring sufficient surface originated flaking life and crack resistance. Note that the Vickers hardness at a position at a depth of 0.1 mm from the surface of each rolling sliding surface is measured as follows. The rolling sliding member is cut from the surface of its rolling sliding surface in its depth direction, and then a Vickers indenter is placed at a position at a depth of 0.1 mm from the surface of the rolling sliding surface to measure the Vickers hardness. In addition, the measured Vickers hardness is converted into the Rockwell C-scale hardness.

The amount of retained austenite at a position at a depth of 0.1 mm from the surface of each rolling sliding surface is higher than or equal to 20% by volume from the viewpoint of ensuring an amount of retained austenite sufficient to achieve sufficient surface originated flaking life, and is lower than or equal to 40% by volume from the viewpoint of ensuring sufficient surface hardness to ensure sufficient surface originated flaking life.

The area ratio of carbide at a position at a depth of 0.03 mm from the surface of each rolling sliding surface is higher than or equal to 1.5% by volume from the viewpoint of ensuring sufficient structural stability by precipitating chromium-based carbide having favorable structural stability and improving precipitation strengthening amount, and is lower than or equal to 8% by volume from the viewpoint of further improving the useful life by reducing the amount of coarse precipitate (for example, precipitate having a grain diameter of 10 µm) of carbide in the surface layer. Note that the area ratio of the carbide is an area ratio of carbide at a cut surface obtained by cutting each rolling sliding member at a depth of 0.03 mm from the surface of the rolling sliding surface of the rolling sliding member. The area ratio of the carbide is calculated as follows. The rolling sliding member is immersed in an etchant containing 5% of picric acid alcohol by mass for ten seconds to be corroded, and then the SE image (1000 µm²) of a corroded surface is observed by a scanning electron microscope (produced by Shimadzu Corporation, Product Name: EPMA-1600, 3000x magnification).

The Vickers hardness at a portion that is located at the center, in the axially longitudinal direction, of a portion at which the rolling sliding surface is formed and that is located at the center, in the thickness direction, of the portion at which the rolling sliding surface is formed (hereinafter, referred to as "sectional center portion") is higher than or equal to 300 (Rockwell C-scale hardness of 29.8) from the viewpoint of ensuring sufficient static strength as a rolling bearing, and is lower than or equal to 510 (Rockwell C-scale hardness of 49.8) from the viewpoint of ensuring sufficient crack resistance as a rolling bearing. Note that, in this specification, the Vickers hardness at the sectional center portion is measured by placing the Vickers indenter at the sectional center portion in the rolling sliding member. In addition, the measured Vickers hardness is converted into the Rockwell C-scale hardness. When the rolling sliding member is the outer ring or the inner ring, the sectional center portion is a portion that is located at the center, in the axially longitudinal direction, of a portion at which the raceway surface is formed, and that is located at the center, in the thickness direction, of the portion at which the raceway surface is formed. When the rolling sliding member is the rolling element, the sectional center portion is a portion that is located at the center, in the axially longitudinal direction, of a portion at which the rolling contact surface is formed, and that is located at the center, in the thickness direction, of the portion at which the rolling contact surface is formed.

The martensitic transformation ratio at the sectional center portion is higher than or equal to 50% from the viewpoint of ensuring sufficient toughness. In addition, the martensitic transformation ratio at the sectional center portion is preferably near 100% because the toughness improves as the martensite rate increases. The martensitic transformation ratio is calculated as follows. The SE image (three to five fields of view, 36000 to 60000 µm²) of a ground surface of the sectional center portion is captured by a scanning electron microscope (produced by Shimadzu Corporation, Product Name: EPMA-1600, 1000x magnification), the portion corresponding to martensite is shaded, and the ratio of the area of the shaded portion to the area of the SEM image is calculated.

Note that the first outer ring member 2a and second outer ring members 2b that constitute the outer ring 2, the inner ring members 3a that constitute the inner ring 3 and the tapered rollers 4 are manufactured by a method of manufacturing a rolling sliding member according to an embodiment of the invention, described below.

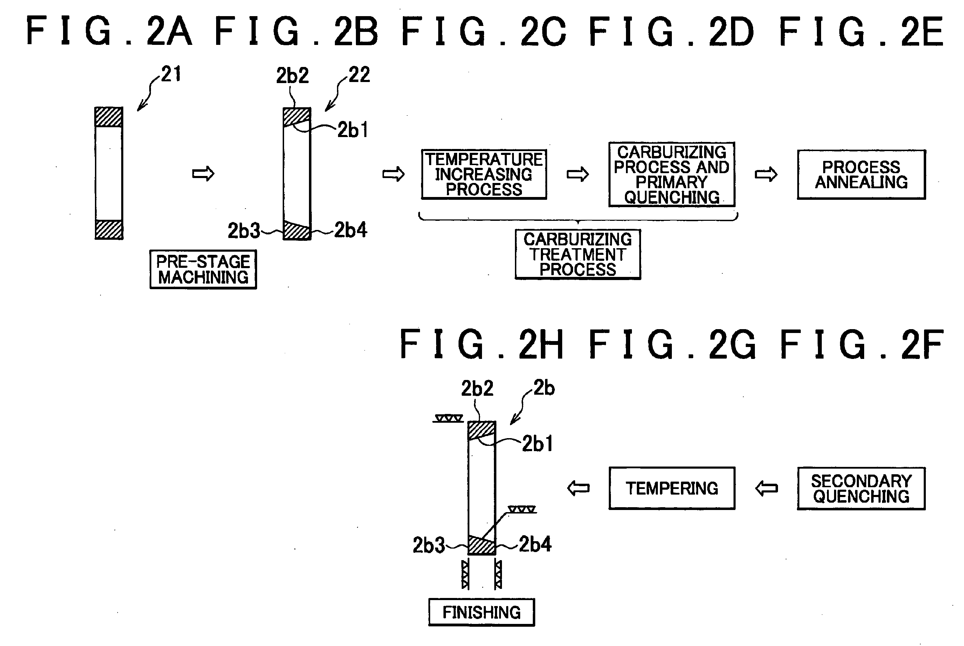

Next, a method of manufacturing the outer ring (second outer ring members) will be described as an example of the method of manufacturing a rolling sliding member. FIG. 2 is a process chart of the method of manufacturing a rolling sliding member according to the embodiment of the invention.

First, an annular blank 21 (see FIG. 2A), which will be the second outer ring member, made of the steel material is manufactured, the obtained annular blank 21 is subjected to cutting, or the like, to be machined into a predetermined shape to thereby obtain a semi-finished product 22, which will be the second outer ring, having grinding allowance at portions at which the raceway surface 2b1, an outer peripheral surface 2b2 and end faces 2b3 and 2b4 will be formed ("pre-stage machining process", see FIG. 2B). In the manufacturing method according to the present embodiment, there is used the steel material in which the contents of nickel and molybdenum, which are expensive, are equal to or lower than 0.2% by mass and lower than 0.1 % by mass, respectively. Thus, it is possible to manufacture the rolling sliding member at low material cost.

Subsequently, the obtained semi-finished product 22 is placed in a carburizing furnace. Then, the semi-finished product 22 is heated to 860°C while air is introduced into the carburizing furnace to keep the oxygen partial pressure of the atmosphere in the carburizing furnace at at least 4.23×10⁻¹⁵ Pa. Thus, the temperature of the semi-finished product 22 is increased ("temperature increasing process", FIG. 2C). After that, the semi-finished product 22 is heated at a carburizing temperature of 930 to 990°C in the carburizing atmosphere having a carbon potential of 0.8 to 1.1. Then, the semi-finished product 22 is quenched at a quenching temperature of 850 to 900°C in the carburizing atmosphere having a carbon potential of 0.8 to 1.1, and is rapidly quenched (primary quenching). Thus, a semi-finished product having an effective case depth of 1.5 to 8 mm is obtained ("carburizing process", FIG. 2D). These temperature increasing process and carburizing process belong to a carburizing treatment process, and carried out successively in the same carburizing furnace.

The steel material that constitutes the semi-finished product 22 contains 2.4 to 3.2% of chromium by mass. Therefore, during heating at the time of carburizing, a chromium oxide film that may be a factor of inhibiting carburizing is likely to be formed. However, in the manufacturing method according to the present embodiment, the semi-finished product 22 is heated to 860°C while air is supplied into a carburizing furnace to keep the oxygen partial pressure of the atmosphere in the carburizing furnace at at least 4.23 × 10⁻¹⁵ Pa. Therefore, it is possible to suppress formation of a chromium oxide film. In addition, because formation of a chromium oxide film is suppressed just by adjusting the oxygen partial pressure, a cumbersome work, that is, removal of a work-affected layer, is not required, unlike in the conventional manufacturing method.

In the temperature increasing process, the oxygen partial pressure is higher than or equal to 4.23 × 10⁻¹⁵ Pa from the viewpoint of suppressing formation of a chromium oxide film to suppress inhibition of carburizing, and is lower than or equal to the oxygen partial pressure (2.13 × 10⁴ Pa) in the atmospheric pressure (101325 Pa), desirably, lower than or equal to 1.00 × 10⁻¹⁵ Pa, from the viewpoint of preventing the oxidized scale from being excessive.

In addition, in the temperature increasing process, the upper limit of the temperature range in which the oxygen partial pressure should be kept at a predetermined value is lower than or equal to 860°C, desirably, lower than or equal to 800°C, from the viewpoint of suppressing formation of a chromium oxide film and preventing the oxidized scale from being excessive. The lower limit of the temperature range in which the oxygen partial pressure should be kept at the value is higher than or equal to 400°C, desirably, higher than or equal to 600°C, from the viewpoint of suppressing excessive formation of a chromium oxide film.

In the temperature increasing process, the rate of temperature increase is desirably lower than or equal to 1.0°C/sec from the viewpoint of suppressing inhibition of carburizing and suppressing nonuniform carburization. Thus, the surface of the semi-finished product 22 is placed in a state suitable for carburizing, by ensuring a growth time of an iron-based oxide film. The lower limit of the rate of temperature increase is higher than or equal to 0.01°C/sec from the viewpoint of shortening a cycle time to reduce manufacturing cost.

In the carburizing process, the carbon potential of the carburizing atmosphere is higher than or equal to 0.8 from the viewpoint of ensuring a sufficient hardness at the surface, and is lower than or equal to 1.1 from the viewpoint of further improving the useful life by reducing the amount of coarse precipitate (for example, precipitate having a grain diameter of 10 µm) of carbide in the surface layer.

The carburizing temperature is higher than or equal to 930°C from the viewpoint of shortening the carburizing time, and is lower than or equal to 990°C from the viewpoint of further improving the useful life by reducing the amount of coarse precipitate (for example, precipitate having a grain diameter of 10 µm) of carbide in the surface layer. In addition, the heating time is longer than or equal to 10 hours from the viewpoint of obtaining a carburizing case depth sufficient for strengthening of the surface layer.

The quenching temperature is higher than or equal to 850°C from the viewpoint of reducing manufacturing cost by shortening the cycle time, and is lower than or equal to 900°C from the viewpoint of suppressing deformation and an excessive increase in grain size. The quenching time is longer than or equal to 0.05 hours from the viewpoint of heating the entire section of the semi-finished product to a uniform temperature, and is shorter than or equal to 2 hours from the viewpoint of reducing manufacturing cost by shortening the cycle time. The semi-finished product 22 is rapidly quenched through oil quenching (primary quenching). The semi-finished product 22 is placed in an oil bath filled with cooling oil. The temperature of cooling oil in the oil bath is usually 60 to 180°C.

Subsequently, the semi-finished product is heated at 630 to 690°C ("process annealing process", FIG. 2E). In the process annealing process, the annealing temperature is desirably higher than or equal to 630°C from the viewpoint of decomposing retained austenite produced in the carburizing process near a transformation point A₁, and is desirably lower than or equal to 690°C from the viewpoint of setting the annealing temperature to be lower than or equal to a transformation point A_{cm} and a transformation point A₃ to avoid austenitizing. The annealing time is usually at least 0.5 hours, for example, 0.5 to 10 hours.

Subsequently, the semi-finished product is subjected to quenching at 820 to 850°C ("secondary quenching process", FIG. 2F). The quenching temperature is desirably higher than or equal to 810°C from the viewpoint of forming a sufficient amount of martensite, and is desirably lower than or equal to 850°C from the viewpoint of suppressing an excessive increase in grain size and suppressing an excessive increase in the amount of retained austenite. The quenching time is usually at least 1 hour, for example, 1 to 5 hours from the viewpoint of carrying out uniform quenching.

Subsequently, the semi-finished product is subjected to tempering at 160 to 200°C ("tempering process", FIG. 2G). The tempering temperature is desirably higher than or equal to 160°C from the viewpoint of ensuring sufficient heat resistance as a rolling bearing, and is desirably lower than or equal to 200°C from the viewpoint of ensuring a predetermined hardness. The tempering time is usually 1 to 5 hours, preferably, equal to or longer than 2 hours, from the viewpoint of carrying out uniform tempering.

After that, portions of the semi-finished product, which will be the raceway surface 2b1, the outer peripheral surface 2b2 and the end faces 2b3 and 2b4 of the second outer ring member 2b, after tempering are subjected to grinding finishing, and the raceway surface 2b1 is subjected to super finishing to have a predetermined precision (see FIG. 2H, "finishing process"). In this way, a finished product, that is, the second outer ring member 2b is obtained. In the obtained second outer ring member 2b, the raceway surface 2b1, the outer peripheral surface 2b2 and the end faces 2b3 and 2b4 are ground portions.

Hereafter, the invention will be described in more detail using examples. However, the invention is not limited to those examples.

Hereafter, first to seventh examples and first to ninth comparative examples will be described. Steel materials having compositions shown in Table 1 or Table 2 were machined into predetermined shapes to manufacture the semi-finished products that will be the first outer ring member 2a and the second outer ring member 2b that constitute the outer ring 2, the inner ring member 3a that constitutes the inner ring 3 and the tapered roller 4, of the four-row tapered roller bearing device 1 serving as a rolling bearing. The first outer ring member 2a, the second outer ring member 2b and the inner ring member 3a respectively have grinding allowances at portions at which the raceway surfaces 2a1, 2b1 and 3a1 will be formed. In addition, the tapered roller 4 that serves as a rolling element has a grinding allowance at a portion at which the rolling surface will be formed.

**Table 1**

| Example | C Content (mass%) | Si Content (mass%) | Mn Content (mass%) | Ni Content (mass%) | Cr Content (mass%) | Mo Content (mass%) | Hardenability Index [Value of (I)] | Conditions |
|---|---|---|---|---|---|---|---|---|
| 1 | 0.17 | 0.50 | 1.39 | 0.10 | 2.90 | 0.02 | 5.82 | (A) |
| 2 | 0.17 | 0.51 | 1.51 | 0.09 | 2.49 | 0.02 | 5.65 | |
| 3 | 0.17 | 0.25 | 1.54 | 0.10 | 2.88 | 0.02 | 5.68 | |
| 4 | 0.16 | 0.33 | 1.50 | 0.10 | 2.96 | 0.03 | 5.72 | |
| 5 | 0.18 | 0.33 | 1.54 | 0.10 | 3.05 | 0.03 | 6.81 | |
| 6 | 0.16 | 0.25 | 1.50 | 0.10 | 2.93 | 0.03 | 5.42 | |
| 7 | 0.18 | 0.29 | 1.54 | 0.10 | 2.97 | 0.03 | 6.50 | |

**Table 2**

| Comparative Example | C Content (mass%) | Si Content (mass%) | Mn Content (mass%) | Ni Content (mass%) | Cr Content (mass%) | Mo Content (mass%) | Hardenability Index [Value of (I)] | Conditions |
|---|---|---|---|---|---|---|---|---|
| 1 | 0.20 | 0.50 | 0.60 | 3.00 | 0.80 | 0.30 | 4.83 | (B) |
| 2 | 0.30 | 0.40 | 1.00 | 0.10 | 1.50 | 1.00 | 15.7 | (C) |
| 3 | 0.15 | 0.25 | 0.50 | 4.00 | 0.80 | 0.15 | 2.52 | (D) |
| 4 | 0.20 | 0.25 | 0.55 | 2.20 | 0.70 | 0.30 | 3.02 | |
| 5 | 0.17 | 0.24 | 1.71 | 0.09 | 2.49 | 0.03 | 5.77 | (E) |
| 6 | 0.16 | 0.26 | 1.57 | 0.10 | 2.89 | 0.03 | 5.67 | |
| 7 | 0.17 | 0.25 | 1.98 | 0.10 | 2.12 | 0.02 | 6.04 | (F) |
| 8 | 0.17 | 0.49 | 1.77 | 0.10 | 2.10 | 0.03 | 6.01 | |
| 9 | 0.18 | 0.25 | 1.54 | 0.10 | 2.30 | 0.03 | 5.11 | |

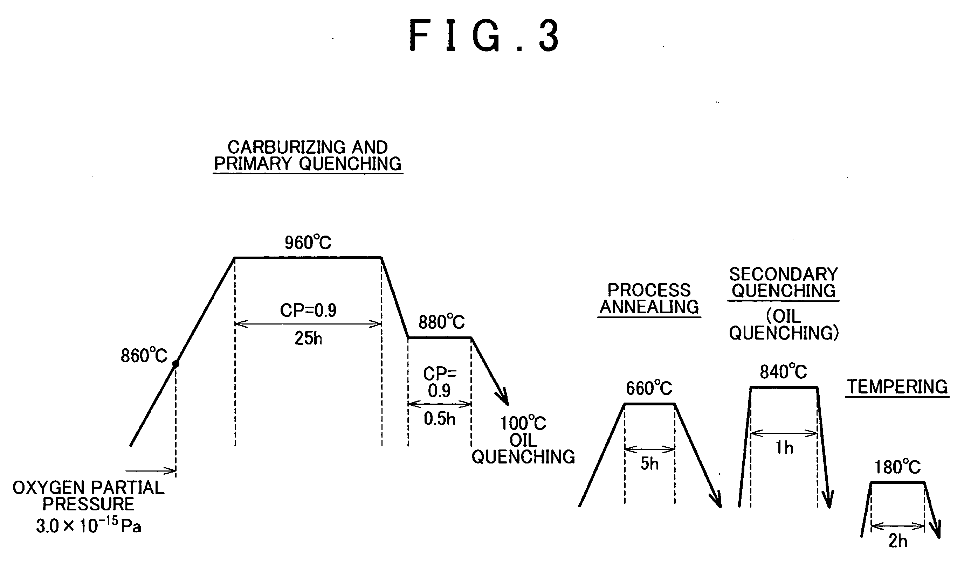

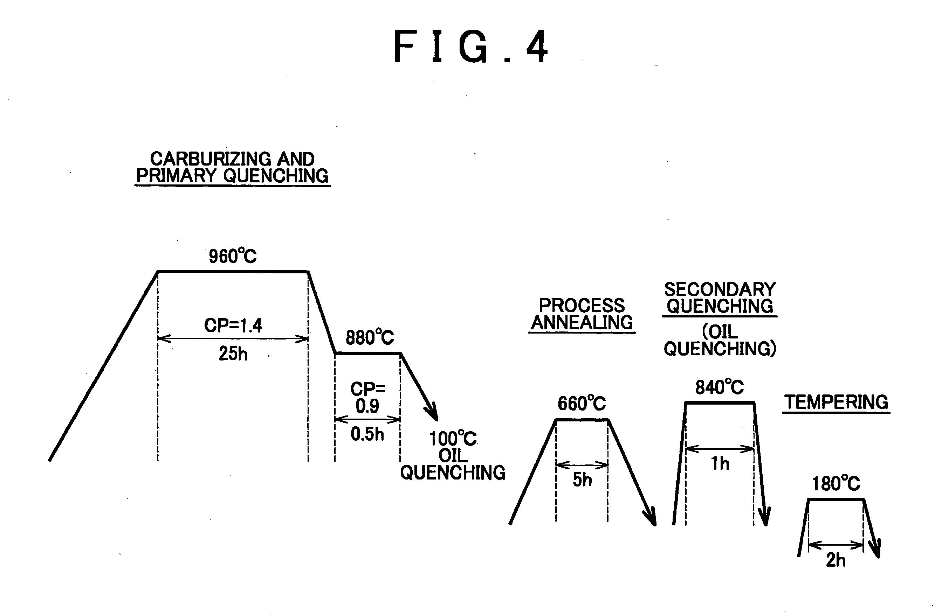

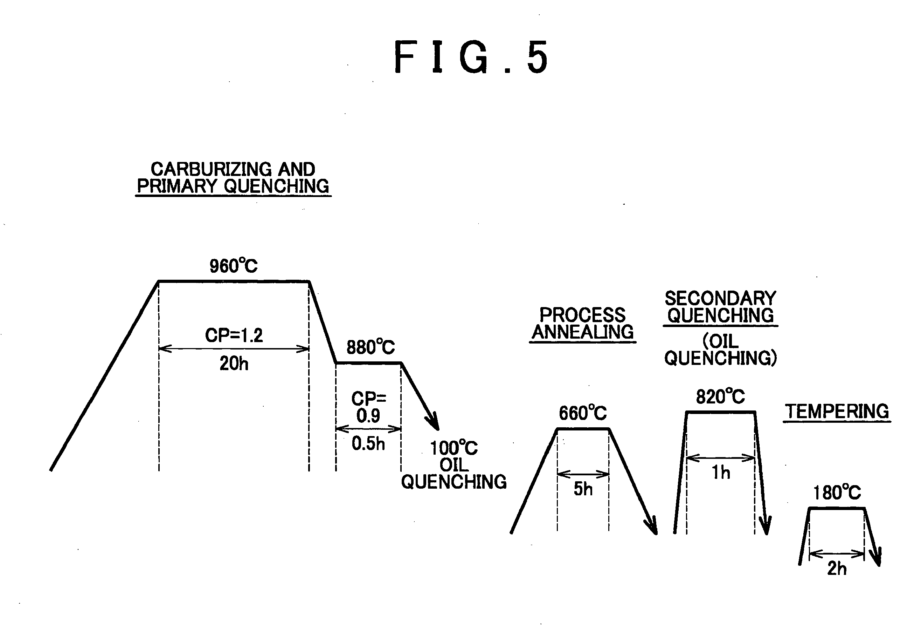

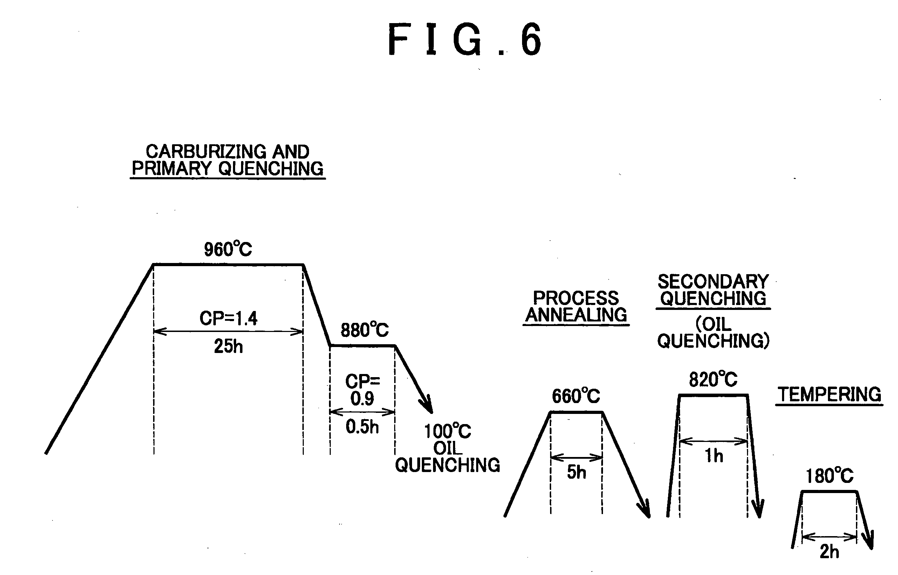

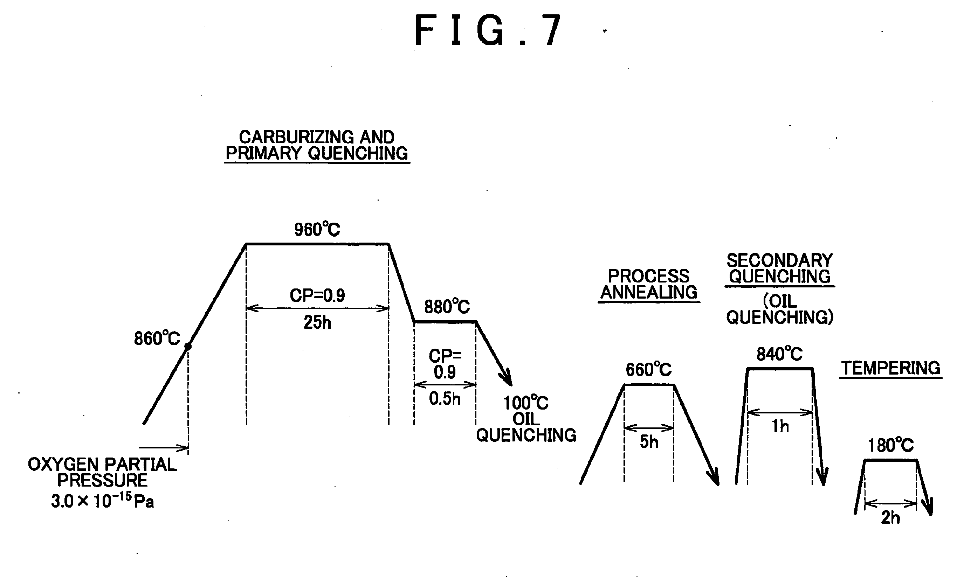

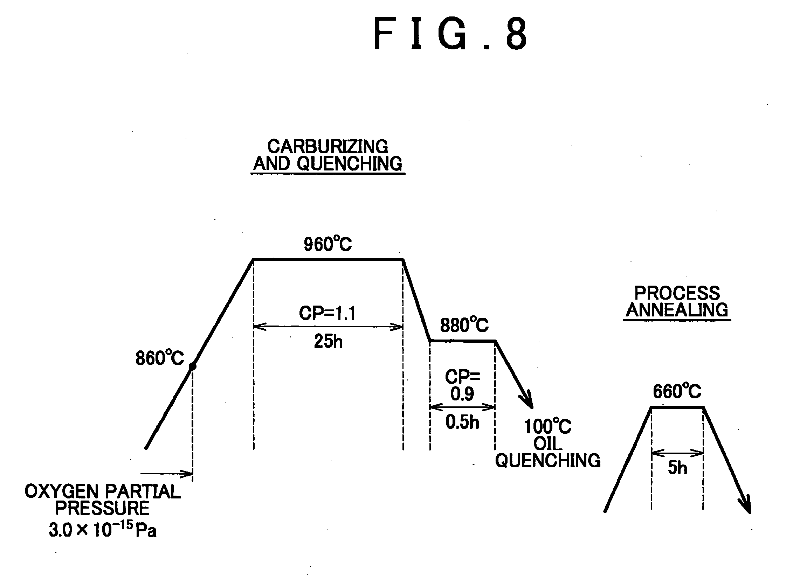

Subsequently, the obtained semi-finished products were subjected to a heat treatment (see Table 1, Table 2 and FIG. 3 to FIG. 8). Portions of the semi-finished products obtained through the heat treatment, which form the raceway surfaces (the outer ring member, the inner ring member), and portions of the semi-finished products obtained through the heat treatment, which form the rolling surface (the rolling element) were subjected to grinding to obtain the rolling sliding members (the first outer ring member 2a, the second outer ring member 2b, the inner ring member 3a and the tapered roller 4) according to the first to seventh examples and the first to ninth comparative examples. Then, the rolling sliding members according to the first to seventh examples and the first to ninth comparative examples were used to manufacture the four-row tapered roller bearing devices. The heat treatment conditions in the first to seventh examples (Conditions (A) shown in Table 1) are shown in FIG. 3. The heat treatment conditions in the first comparative example (Conditions (B) shown in Table 2) are shown in FIG. 4. The heat treatment conditions in the second comparative example (Conditions (C) shown in Table 2) are shown in FIG. 5. The heat treatment conditions in the third and fourth comparative examples (Conditions (D) shown in Table 2) are shown in FIG. 6. The heat treatment conditions in the fifth and sixth comparative examples (Conditions (E) shown in Table 2) are shown in FIG. 7. The heat treatment conditions in the seventh to ninth comparative examples (Conditions (F) shown in Table 2) are shown in FIG. 8.

The heat treatment conditions shown in FIG. 3 are conditions that the semi-finished product is set in the carburizing furnace, the semi-finished product is heated to 860°C at the rate of temperature increase of 0.08°C/sec while air is introduced into the carburizing furnace to keep the oxygen partial pressure of the atmosphere in the carburizing furnace at 3.0 × 10⁻¹⁵ Pa, the semi-finished product is then heated at 960°C for 25 hours in the carburizing atmosphere having a carbon potential of 0.9, after that, the semi-finished product is heated at 880°C for 0.5 hours in the carburizing atmosphere having a carbon potential of 0.9 and is quenched by oil to 100°C (carburizing and primary quenching), and, after that, the semi-finished product is heated at 660°C for 5 hours (process annealing), heated at 840°C for 1 hour (secondary quenching) and heated at 180°C for 2 hours (tempering). The heat treatment conditions shown in FIG. 3 satisfy the heat treatment conditions in the above-described method of manufacturing the rolling sliding member according to the invention. The heat treatment conditions shown in FIG. 4 are conditions that the semi-finished product is heated at 960°C for 25 hours in the carburizing atmosphere having a carbon potential of 1.4 in the carburizing furnace, after that, the semi-finished product is heated at 880°C for 0.5 hours in the carburizing atmosphere having a carbon potential of 0.9 and is quenched by oil to 100°C (carburizing and primary quenching), and, after that, the semi-finished product is heated at 660°C for 5 hours (process annealing), heated at 840°C for 1 hour (secondary quenching) and heated at 180°C for 2 hours (tempering). The heat treatment conditions shown in FIG. 5 are conditions that the semi-finished product is heated at 960°C for 20 hours in the carburizing atmosphere having a carbon potential of 1.2 in the carburizing furnace, after that, the semi-finished product is heated at 880°C for 0.5 hours in the carburizing atmosphere having a carbon potential of 0.9 and is quenched by oil to 100°C (carburizing and primary quenching), and, after that, the semi-finished product is heated at 660°C for 5 hours (process annealing), heated at 820°C for 1 hour (secondary quenching) and heated at 180°C for 2 hours (tempering). The heat treatment conditions shown in FIG. 6 are conditions that the semi-finished product is heated at 960°C for 25 hours in the carburizing atmosphere having a carbon potential of 1.4 in the carburizing furnace, after that, the semi-finished product is heated at 880°C for 0.5 hours in the carburizing atmosphere having a carbon potential of 0.9 and is quenched by oil to 100°C (carburizing and primary quenching), and, after that, the semi-finished product is heated at 660°C for 5 hours (process annealing), heated at 820°C for 1 hour (secondary quenching) and heated at 180°C for 2 hours (tempering). The heat treatment conditions shown in FIG. 7 are conditions that the semi-finished product is set in the carburizing furnace, the semi-finished product is heated to 860°C at the rate of temperature increase of 0.07°C/sec while the oxygen partial pressure of the atmosphere in the carburizing furnace is kept at 3.0 × 10⁻¹⁵ Pa, then the semi-finished product is heated at 960°C for 25 hours in the carburizing atmosphere having a carbon potential of 0.9 in the carburizing furnace, after that, the semi-finished product is heated at 880°C for 0.5 hours in the carburizing atmosphere having a carbon potential of 0.9 and is quenched by oil to 100°C (carburizing and primary quenching), and, after that, the semi-finished product is heated at 660°C for 5 hours (process annealing), heated at 840°C for 1 hour (secondary quenching) and is heated at 180°C for 2 hours (tempering). The heat treatment conditions shown in FIG. 8 are conditions that the semi-finished product is set in the carburizing furnace, the semi-finished product is heated to 860°C at the rate of temperature increase of 0.07°C/sec while the oxygen partial pressure of the atmosphere in the carburizing furnace is kept at 3.0 × 10⁻¹⁵ Pa, then the semi-finished product is heated at 960°C for 25 hours in the carburizing atmosphere having a carbon potential of 1.1 in the carburizing furnace, after that, the semi-finished product is heated at 880°C for 0.5 hours in the carburizing atmosphere having a carbon potential of 0.9 and is quenched by oil to 100°C (carburizing and primary quenching), and, after that, the semi-finished product is heated at 660°C for 5 hours (process annealing).

A first test example will be described below. For each of the rolling sliding members (tapered rollers) obtained according to the methods in the first to seventh examples and the first to ninth comparative examples, there were checked the carbon content in the surface layer in the range from the surface to the depth of 0.05 mm (hereinafter, referred to as "surface carbon content"), the hardness at a position at a depth of 0.1 mm from the surface (hereinafter, referred to as "surface hardness"), the amount of retained austenite at a position at a depth of 0.1 mm from the surface (hereinafter, referred to as "surface retained austenite amount"), the area ratio of carbide at a position at a depth of 0.03 mm from the surface (hereinafter, referred to as "surface carbide area ratio"), the hardness at the sectional center portion (hereinafter, referred to as "internal hardness") and the martensitic transformation ratio at the sectional center portion (hereinafter, referred to as "internal martensitic transformation ratio").

The surface carbon content was obtained as follows. Each of the rolling sliding members (tapered rollers) obtained according to the methods in the first to seventh examples and the first to ninth comparative examples was cut in the depth direction from the surface of each rolling contact surface, and then the carbon content in the surface layer in the range from the surface to the depth of 0.05 mm was measured. The surface hardness was measured as follows. Each of the rolling sliding members (tapered rollers) obtained according to the methods in the first to seventh examples and the first to ninth comparative examples was cut in the depth direction from the surface of the rolling contact surface, and then the Vickers indenter was placed at a position at a depth of 0.1 mm from the surface to measure the surface hardness. In addition, the measured Vickers hardness is converted into the Rockwell C-scale hardness. The surface retained austenite amount was obtained as follows. Each of the rolling sliding members (tapered rollers) obtained according to the methods in the first to seventh examples and the first to ninth comparative examples was electrolytically-ground from the surface of the rolling contact surface to a depth of 0.1 mm, and the amount of retained austenite on the electrolytically-ground surface was measured. The surface carbide area ratio was calculated as follows. Each of the rolling sliding members (tapered rollers) obtained according to the methods in the first to seventh examples and the first to ninth comparative examples was cut at a depth of 0.03 mm from the rolling contact surface, was immersed in an etchant containing 5% of picric acid alcohol by mass for ten seconds to be corroded, and then the SE image (1000 µm²) of the cut surface was captured by scanning electron microscope (produced by Shimadzu Corporation, Product Name: EPMA-1600, 3000x magnification) to check the ratio of the area of carbide to the area of the SE image. The internal hardness was measured as follows. Each of the rolling sliding members (tapered rollers) obtained according to the methods in the first to seventh examples and the first to ninth comparative examples was cut in the depth direction from the surface of the rolling contact surface, and then the Vickers indenter was placed at the sectional center portion to measure the internal hardness. In addition, the measured Vickers hardness is converted into the Rockwell C-scale hardness. The internal martensitic transformation ratio was calculated as follows. The SE image (three to five fields of view, 36000 to 60000 µm²) of the ground surface of the sectional center portion was captured by scanning electron microscope (produced by Shimadzu Corporation, Product Name: EPMA-1600, 1000x magnification), the portion corresponding to martensite was shaded, and the ratio of the area of the shaded portion to the area of the SEM image was calculated.

In the first test example, the results obtained by checking the surface carbon content, the surface hardness, the surface retained austenite amount, the surface carbide area ratio, the internal hardness and the internal martensitic transformation ratio are shown in Table 3 and Table 4.

**Table 3**

| Example | Surface C Content (mass%) | Surface Hardness Vickers Hardness (Rockwell C-scale Hardness) (HRC) | Surface Retained Austenite Amount (mass%) | Surface Carbide Area Ratio (%) | Internal Hardness Vickers Hardness (Rockwell C-scale Hardness) (HRC) | Internal Martensitic Transformation Ratio (%) |
|---|---|---|---|---|---|---|
| 1 | 0.95 | 720 | 30 | 4.00 | 405 | 60 |
| | | (61.0) | | | (41) | |
| 2 | 0.95 | 720 | 30 | 3.00 | 405 | 55 |
| | | (61.0) | | | (41) | |
| 3 | 0.95 | 750 | 30 | 5.00 | 405 | 55 |
| | | (62.0) | | | (41) | |
| 4 | 0.85 | 720 | 20 | 1.50 | 395 | 55 |
| | | (61.0) | | | (40) | |
| 5 | 0.85 | 720 | 20 | 1.50 | 405 | 60 |
| | | (61.0) | | | (41) | |
| 6 | 0.95 | 750 | 40 | 3.00 | 395 | 50 |
| | | (62.0) | | | (40) | |
| 7 | 0.90 | 735 | 30 | 4.00 | 405 | 65 |
| | | (61.5) | | | (41) | |

**Table 4**

| Comparative Example | Surface C Content (mass%) | Surface Hardness Vickers Hardness (Rockwell C-scale Hardness) (HRC) | Surface Retained Austenite Amount (mass%) | Surface Carbide Area Ratio (%) | Internal Hardness Vickers Hardness (Rockwell C-scale Hardness) (HRC) | Internal Martensitic Transformation Ratio (%) |
|---|---|---|---|---|---|---|
| 1 | 0.90 | 720 | 25 | 0.50 | 370 | 35 |
| | | (61) | | | (38) | |
| 2 | 0.95 | 750 | 30 | 1.00 | 485 | 70 |
| | | (62) | | | (48) | |
| 3 | 0.90 | 720 | 25 | 0.50 | 330 | 30 |
| | | (61) | | | (33) | |
| 4 | 0.90 | 720 | 25 | 1.00 | 280 | 7 |
| | | (61) | | | (27) | |
| 5 | 0.95 | 720 | 30 | 3.00 | 395 | 50 |
| | | (61) | | | (40) | |
| 6 | 0.90 | 700 | 25 | 2.00 | 385 | 45 |
| | | (60) | | | (39) | |
| 7 | 0.95 | 720 | 30 | 3.00 | 405 | 60 |
| | | (61) | | | (41) | |
| 8 | 0.90 | 720 | 30 | 3.00 | 405 | 60 |
| | | (61) | | | (41) | |
| 9 | 0.95 | 720 | 30 | 3.00 | 385 | 45 |
| | | (61) | | | (39) | |

In addition, the corrosion resistance (rust resistance) of each of the rolling sliding members (tapered rollers) obtained according to the methods in the first to seventh examples and the first to ninth comparative examples was evaluated. Specimens prepared according to the methods in the first to seventh examples and the first to ninth comparative examples were used to evaluate rust resistance. The specimens were prepared as follows. First, circular cylindrical blanks having a diameter of 32 mm, made of the steel materials used in the first to seventh examples and the first to ninth comparative examples (steel materials having compositions shown in Table 1 and Table 2), were subjected to heat treatment under the same heat treatment conditions as those of the first to seventh examples shown in Table 1 and the first to ninth comparative examples shown in Table 2. Subsequently, the blanks after heat treatment were ground to obtain small pieces having dimensions of 20 mm × 30 mm × 8 mm. The 20 mm × 30 mm surfaces of the obtained small pieces were subjected to grinding finishing so as to have a mean roughness of 0.4 µm to thereby obtain the specimens of which rust resistance is evaluated (hereinafter, denoted by "specimens A"). Note that the obtained specimens A have the same surface quality as that of each of the rolling sliding members shown in Table 3 or Table 4. The obtained specimens A were kept at 50°C for 96 hours in the atmosphere having 95% relative humidity by volume. After that, the macro image (600 mm²) of the surface of each of the specimens obtained according to the methods in the first to seventh examples and the first to ninth comparative examples was captured, and the ratio of the area of rust to the area of the macro image (rust area ratio) was calculated.

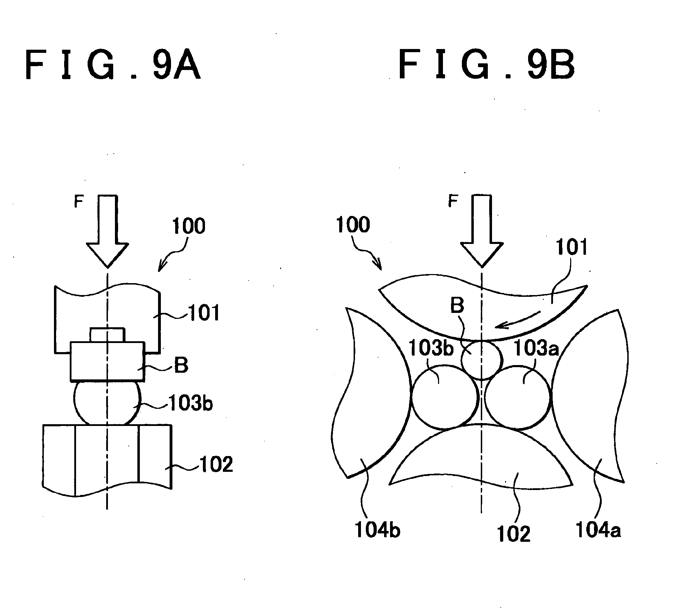

Furthermore, the useful life of each of the rolling sliding members (tapered rollers) obtained according to the methods in the first to seventh examples and the first to ninth comparative examples was evaluated. The specimens prepared according to the methods in the first to seventh examples and the first to ninth comparative examples ware used to evaluate the useful life. The specimens were prepared as follows. First, circular cylindrical blanks having a diameter of 32 mm, made of the steel materials used in the first to seventh examples and the first to ninth comparative examples (steel materials having compositions shown in Table 1 or Table 2), were subjected to a heat treatment under the same heat treatment conditions as those of the first to seventh examples shown in Table 1 and the first to ninth comparative examples shown in Table 2. Subsequently, the blanks after heat treatment were ground to obtain circular cylindrical specimens having a diameter of 20 mm and a height of 36 mm (hereinafter, denoted by "specimens B"). Note that the obtained specimens B have the same surface quality as that of each of the rolling sliding members shown in Table 3 and Table 4. The obtained specimens B were set in the testing machine shown in FIG. 9A and FIG. 9B, the testing machine was operated under the following conditions, and then the useful life of each specimen B until flaking occurs at the specimen B. Then, the relative value of the average useful life of each specimen with respect to the average useful life of the specimen B obtained from the steel material used in the first comparative example was obtained.
Maximum contact stress: 5.8 GPa
Frequency: 285 Hz
Lubrication: Turbine oil VG68 Circulation
Oil temperature: 60°C
Number of specimens: 5
Note that, in the testing machine, the specimen B and two steel balls 103a and 103b are arranged between a drive wheel 101 and a driven wheel 102 in this order from the drive wheel 101-side. The specimen B is in sliding contact with the drive wheel 101 and the two steel balls 103a and 103b. The two steel balls 103a and 103b are slidably arranged between driven wheels 104a and 104b with a predetermined distance maintained therebetween.

In addition, specimens were prepared according to the methods in the first to seventh examples and the first to ninth comparative examples as follows. The crack resistance (fracture toughness) of each of the rolling sliding members (tapered rollers) obtained according to the methods in the first to seventh examples and the first to ninth comparative examples was checked. The specimens prepared according to the methods in the first to seventh examples and the first to ninth comparative examples were used to evaluate the internal fracture toughness. The specimens were prepared as follows. First, circular cylindrical blanks having a diameter of 90 mm, made of the steel materials used in the first to seventh examples and the first to ninth comparative examples (steel materials having compositions shown in Table 1 and Table 2), were subjected to a heat treatment under the same conditions as those of the first to seventh examples shown in Table 1 and the first to ninth comparative examples shown in Table 2. Small tensile test specimens having a shape compliant with ASTM E399-78 (25.4 mm × 63.5 mm × 61 mm, hereinafter, denoted by "specimens C") were taken from portions between the center portions and the peripheral portions of the blanks after heat treatment. Note that the obtained specimens C have the same internal quality as those of the rolling sliding members shown in Table 3 or Table 4. The obtained specimens were subjected to fracture toughness test in accordance with ASTM E399-78 to measure the plane-strain fracture toughness value (K_{IC}). After that, the internal fracture toughness value (K_{IC} of the evaluation target specimen / K_{IC} of the specimen according to the first comparative example) was obtained.

In the first test example, the results obtained by calculating the rust area ratio, the average useful life and the fracture toughness value are shown in Table 5. The corrosion resistance, the useful life and the crack resistance may be evaluated in accordance with the following evaluation criteria.
(Evaluation Criteria)
(Corrosion resistance) When the rust area ratio is smaller than or equal to 4, the corrosion resistance is sufficient as a rolling sliding member. When the rust area ratio exceeds 4, the corrosion resistance is insufficient.
(Useful life) When the average useful life is higher than or equal to 2.00, the useful life is sufficient as a rolling sliding member. When the average useful life is lower than 2.00, the useful life is insufficient as a rolling sliding member.
(Crack resistance) When the fracture toughness value is higher than or equal to 1.2, the crack resistance is sufficient as a rolling sliding member. When the fracture toughness value is lower than 1.2, the crack resistance is insufficient.

**Table 5**

| Specimen | Rust Area Ratio (Relative Value) | Average useful life (Relative Value) | Fracture Toughness Value (K_{IC}) (Relative Value) |
|---|---|---|---|
| Example 1 | 3 | 2.96 | 1.3 |
| Example 2 | 4 | 2.03 | 1.2 |
| Example 3 | 3 | 3.04 | 1.3 |
| Example 4 | 2 | 2.00 | 1.2 |
| Example 5 | 2 | 2.51 | 1.4 |
| Example 6 | 3 | 3.97 | 1.2 |
| Example 7 | 3 | 3.04 | 1.4 |
| Comparative Example 1 | 9 | 1.00 | 1.0 |
| Comparative Example 2 | 7 | 0.92 | 0.7 |
| Comparative Example 3 | 9 | 0.78 | 0.7 |
| Comparative Example 4 | 10 | 0.92 | 0.8 |
| Comparative Example 5 | 4 | 2.03 | 0.9 |
| Comparative Example 6 | 3 | 1.53 | 0.9 |
| Comparative Example 7 | 5 | 1.02 | 0.8 |
| Comparative Example 8 | 4 | 1.48 | 0.9 |
| Comparative Example 9 | 4 | 2.96 | 0.9 |

It is apparent from the results shown in Table 5 that, in each of the specimens obtained according to the methods in the first to seventh examples, the rust area ratio is smaller than or equal to 4, the average useful life is higher than or equal to 2.00 and the fracture toughness value is higher than or equal to 1.2. It is understood from the results that the specimens obtained according to the methods in the first to seventh examples each have sufficient corrosion resistance, sufficient useful life and sufficient crack resistance as a rolling sliding member. In contrast to this, it is understood that at least one of the corrosion resistance, life and crack resistance of each of the specimens obtained according to the methods in the first to ninth comparative examples is insufficient.

The steel materials used in the methods in the first to seventh examples each satisfy the conditions (hereinafter, referred to as "steel material conditions") that each of the steel materials contains 0.16 to 0.19% of carbon by mass, 0.15 to 0.55% of silicon by mass, 0.20 to 1.55% of manganese by mass, 2.4 to 3.2% of chromium by mass, 0.01 to 0.2% of nickel by mass higher than or equal to 0.001% and less than 0.1% of molybdenum by mass and a balance of less than or equal to 97.079% of iron by mass incidental impurities, and the hardenability index expressed by Formula (I) is higher than or equal to 5.4. Those steel materials are inexpensive because the nickel content and the molybdenum content are each smaller than 0.1% by mass. On the other hand, the steel materials used in the methods in the first to ninth comparative examples do not satisfy the steel material conditions. Thus, it is suggested from these results that, with regard to a four-row tapered roller bearing device that is a rolling bearing, if the steel material that satisfies the above conditions is used as steel material and is then subjected to heat treatment under the conditions that satisfy the heat treatment conditions in the method of manufacturing a rolling sliding member according to the invention, it is possible to manufacture rolling sliding members at low cost, to improve the corrosion resistance and crack resistance of the rolling bearing, and to achieve long useful life.

A second test example will be described below. The steel materials having the compositions shown in Table 6 were machined into a predetermined shape to manufacture semi-finished products for the tapered rollers of the four-row tapered roller bearing device 1 serving as a rolling bearing. Note that, in Table 6, a steel material A is the steel material used in the third example, a steel material B is the steel material used in the first example, a steel material C is the steel material used in the fifth comparative example, and a steel material D is the steel material used in the second example.

**Table 6**

| Steel Material | C Content (mass%) | Si Content (mass%) | Mn Content (mass%) | Ni Content (mass%) | Cr Content (mass%) | Mo Content (mass%) |
|---|---|---|---|---|---|---|
| A | 0.17 | 0.25 | 1.54 | 0.10 | 2.88 | 0.02 |
| B | 0.17 | 0.50 | 1.39 | 0.10 | 2.90 | 0.02 |
| C | 0.17 | 0.24 | 1.71 | 0.09 | 2.49 | 0.03 |
| D | 0.17 | 0.51 | 1.51 | 0.09 | 2.49 | 0.02 |

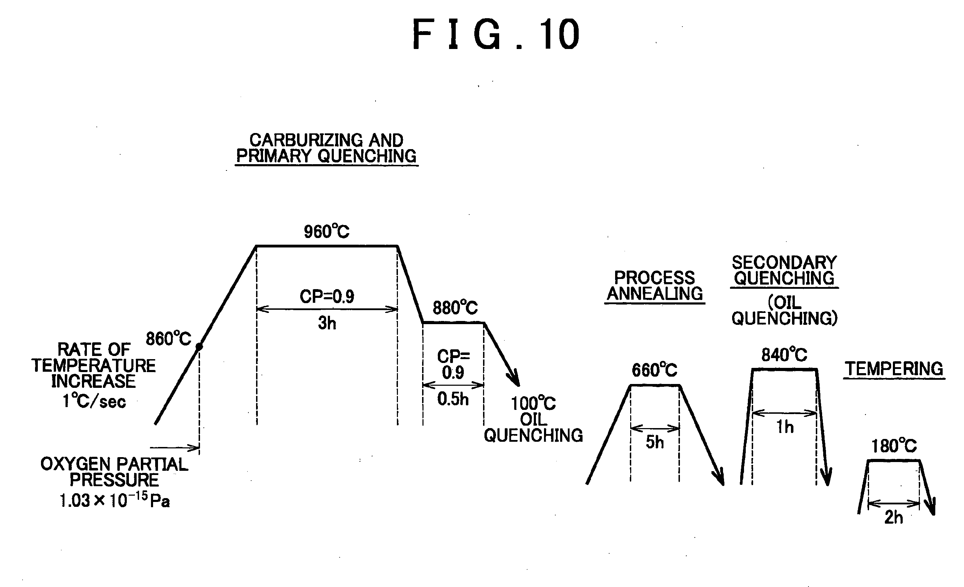

Subsequently, the obtained semi-finished products were subjected to heat treatments shown in FIG. 10 to FIG. 15. Portions of the semi-finished products obtained through the heat treatments, at which the rolling contact surfaces are formed, were subjected to grinding to obtain the rolling sliding members (tapered rollers).

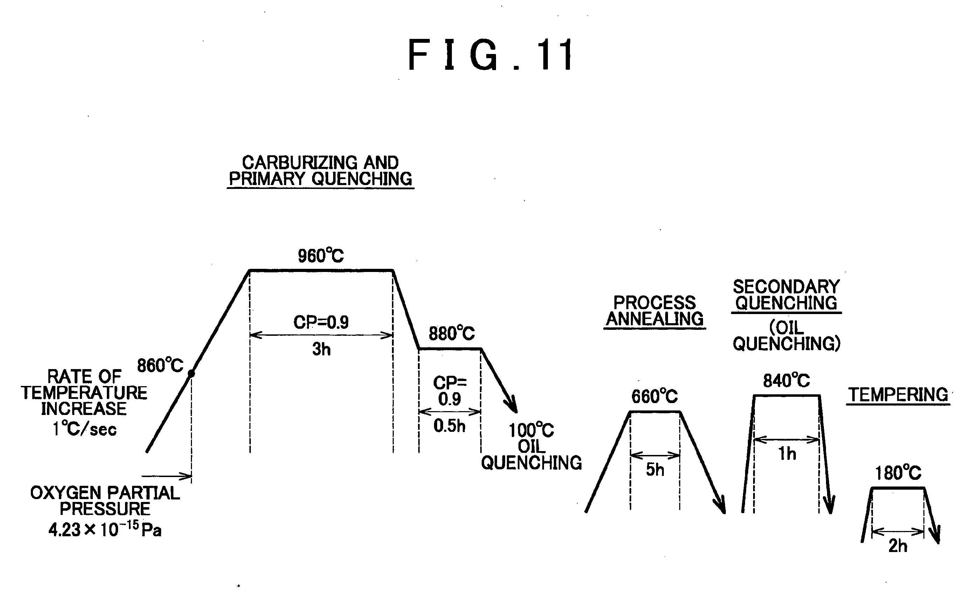

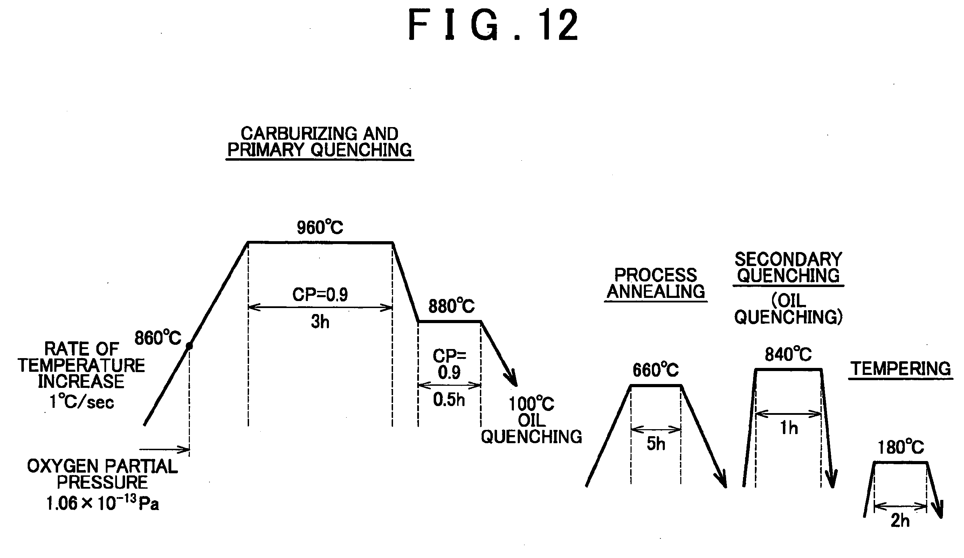

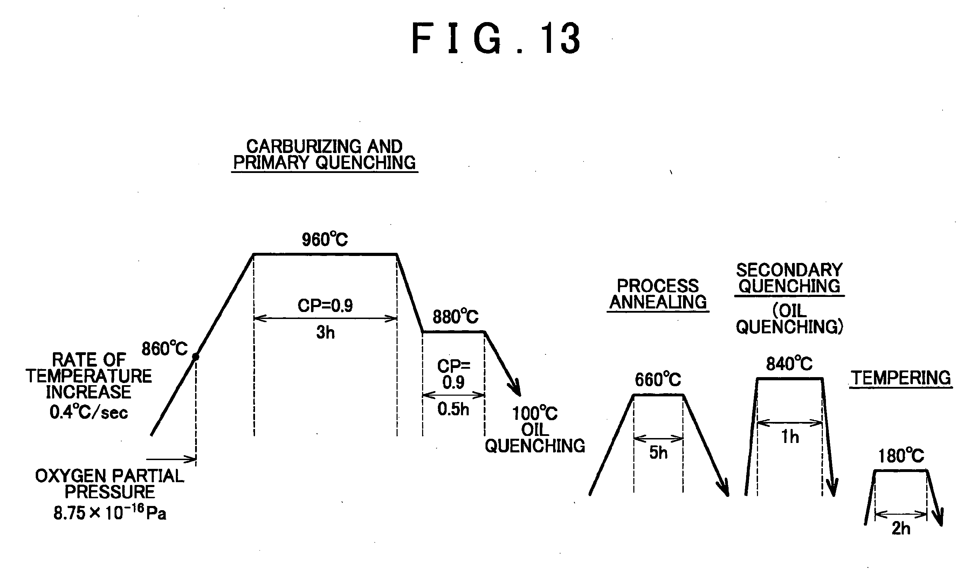

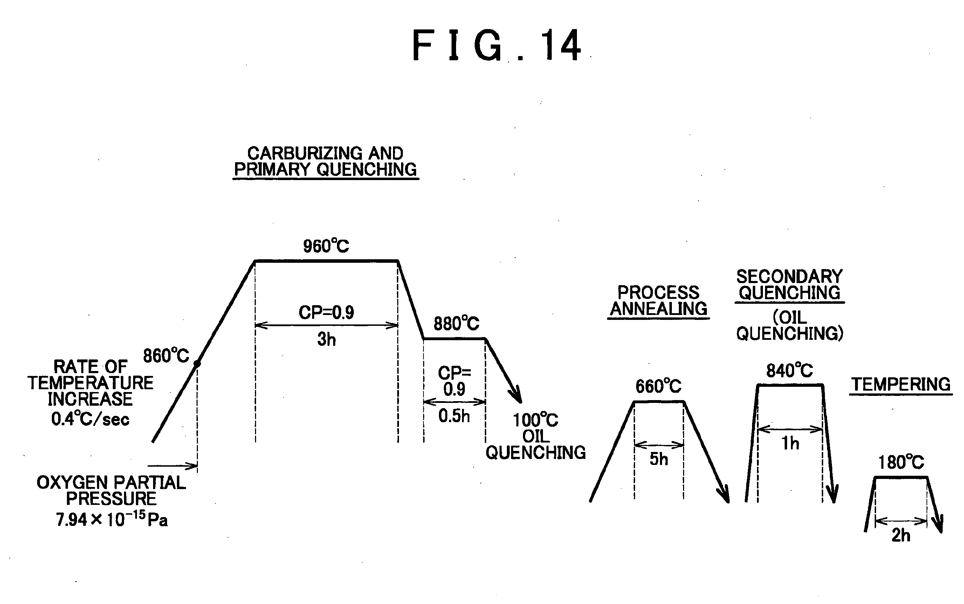

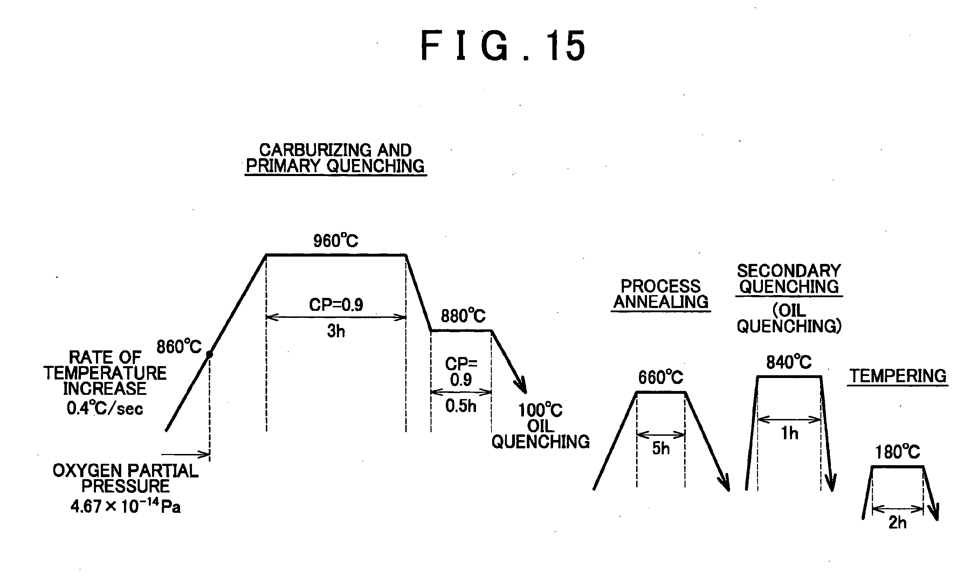

The heat treatment conditions shown in FIG. 10 are conditions that the semi-finished product is set in the carburizing furnace, the semi-finished product is heated to 860°C at the rate of temperature increase of 1°C/sec while air is introduced into the carburizing furnace to keep the oxygen partial pressure of the atmosphere in the carburizing furnace at 1.03 × 10⁻¹⁵ Pa, the semi-finished product is then heated at 960°C for 3 hours in the carburizing atmosphere having a carbon potential of 0.9, after that, the semi-finished product is heated at 880°C for 0.5 hours in the carburizing atmosphere having a carbon potential of 0.9 and is quenched by oil to 100°C (carburizing and primary quenching), and, after that, the semi-finished product is heated at 660°C for 5 hours (process annealing), heated at 840°C for 1 hour (secondary quenching) and heated at 180°C for 2 hours (tempering). The heat treatment conditions shown in FIG. 11 are conditions that the semi-finished product is set in the carburizing furnace, the semi-finished product is heated to 860°C at the rate of temperature increase of 1°C/sec while air is introduced into the carburizing furnace to keep the oxygen partial pressure of the atmosphere in the carburizing furnace at 4.23×10⁻¹⁵ Pa, the semi-finished product is then heated at 960°C for 3 hours in the carburizing atmosphere having a carbon potential of 0.9, after that, the semi-finished product is heated at 880°C for 0.5 hours in the carburizing atmosphere having a carbon potential of 0.9 and is quenched by oil to 100°C (carburizing and primary quenching), and, after that, the semi-finished product is heated at 660°C for 5 hours (process annealing), heated at 840°C for 1 hour (secondary quenching), and heated at 180°C for 2 hours (tempering). The heat treatment conditions shown in FIG. 12 are conditions that the semi-finished product is set in the carburizing furnace, the semi-finished product is heated to 860°C at the rate of temperature increase of 1°C/sec while air is introduced into the carburizing furnace to keep the oxygen partial pressure of the atmosphere in the carburizing furnace at 1.06x 10⁻¹³ Pa, the semi-finished product is then heated at 960°C for 3 hours in the carburizing atmosphere having a carbon potential of 0.9, after that, the semi-finished product is heated at 880°C for 0.5 hours in the carburizing atmosphere having a carbon potential of 0.9 and is quenched by oil to 100°C (carburizing and primary quenching), and, after that, the semi-finished product is heated at 660°C for 5 hours (process annealing), heated at 840°C for 1 hour (secondary quenching) and heated at 180°C for 2 hours (tempering). The heat treatment conditions shown in FIG. 13 are conditions that the semi-finished product is set in the carburizing furnace, the semi-finished product is heated to 860°C at the rate of temperature increase of 0.4°C/sec while air is introduced into the carburizing furnace to keep the oxygen partial pressure of the atmosphere in the carburizing furnace at 8.75 × 10⁻¹⁶ Pa, the semi-finished product is then heated at 960°C for 3 hours in the carburizing atmosphere having a carbon potential of 0.9, after that, the semi-finished product is heated at 880°C for 0.5 hours in the carburizing atmosphere having a carbon potential of 0.9 and is quenched by oil to 100°C (carburizing and primary quenching), and, after that, the semi-finished product is heated at 660°C for 5 hours (process annealing), heated at 840°C for 1 hour (secondary quenching) and heated at 180°C for 2 hours (tempering). The heat treatment conditions shown in FIG. 14 are conditions that the semi-finished product is set in the carburizing furnace, the semi-finished product is heated to 860°C at the rate of temperature increase of 0.4°C/sec while air is introduced into the carburizing furnace to keep the oxygen partial pressure of the atmosphere in the carburizing furnace at 7.94×10⁻¹⁵ Pa, the semi-finished product is then heated at 960°C for 3 hours in the carburizing atmosphere having a carbon potential of 0.9, after that, the semi-finished product is heated at 880°C for 0.5 hours in the carburizing atmosphere having a carbon potential of 0.9 and is quenched by oil to 100°C (carburizing and primary quenching), and, after that, the semi-finished product is heated at 660°C for 5 hours (process annealing), heated at 840°C for 1 hour (secondary quenching) and heated at 180°C for 2 hours (tempering). The heat treatment conditions shown in FIG. 15 are conditions that the semi-finished product is set in the carburizing furnace, the semi-finished product is heated to 860°C at the rate of temperature increase of 0.4°C/sec while air is introduced into the carburizing furnace to keep the oxygen partial pressure of the atmosphere in the carburizing furnace at 4.67×10⁻¹⁴ Pa, the semi-finished product is then heated at 960°C for 3 hours in the carburizing atmosphere having a carbon potential of 0.9, after that, the semi-finished product is heated at 880°C for 0.5 hours in the carburizing atmosphere having a carbon potential of 0.9 and is quenched by oil to 100°C (carburizing and primary quenching), and, after that, the semi-finished product is heated at 660°C for 5 hours (process annealing), heated at 840°C for 1 hour (secondary quenching), and heated at 180°C for 2 hours (tempering).

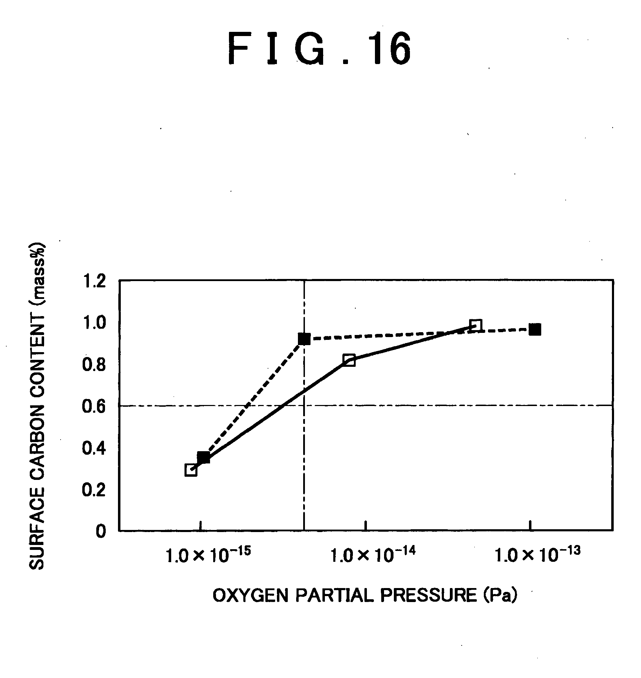

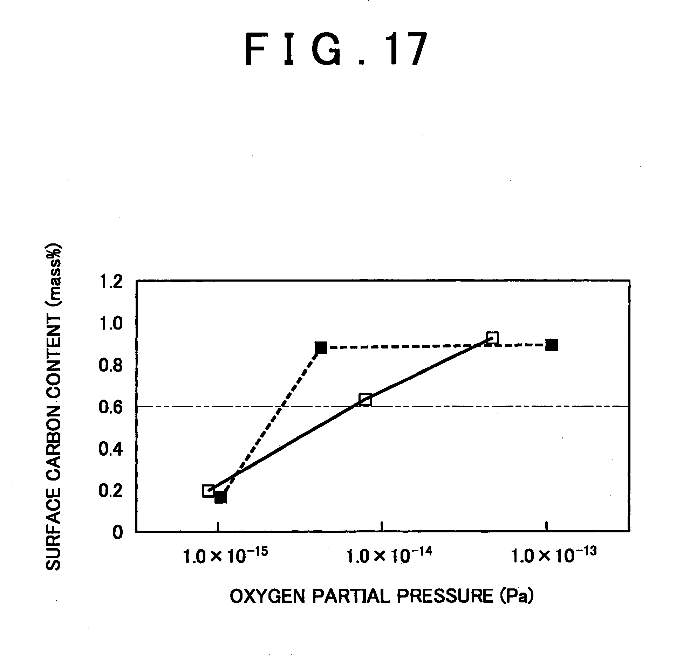

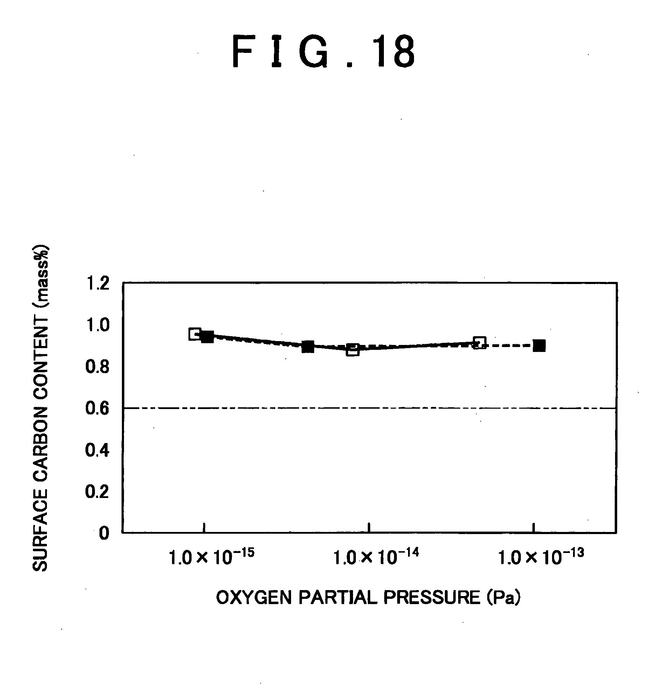

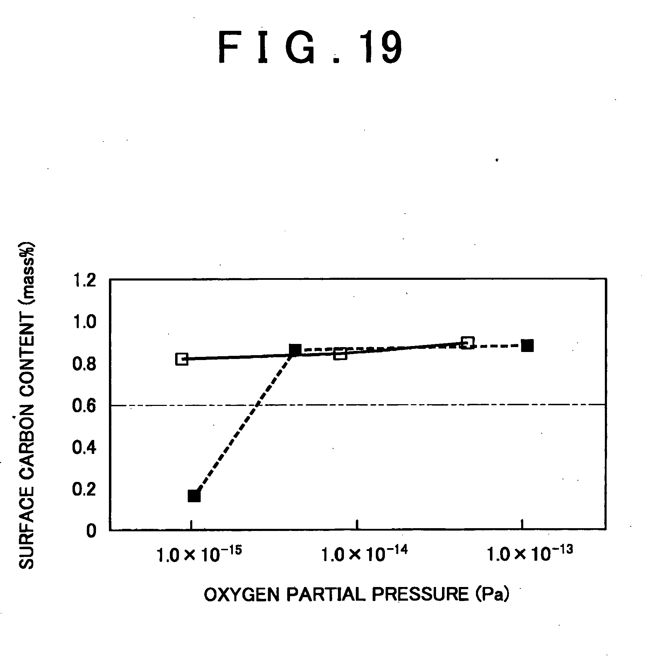

An operation similar to that in the first test example was carried out, and the surface carbon content of each of the obtained rolling sliding members was obtained. FIG. 16 shows the results of studies on the correlation between an oxygen partial pressure and a surface carbon content in the case where the steel material A was used, obtained in the second test example. FIG. 17 shows the results of studies on the correlation between an oxygen partial pressure and a surface carbon content in the case where the steel material B was used, obtained in the second test example. FIG. 18 shows the results of studies on the correlation between an oxygen partial pressure and a surface carbon content in the case where the steel material C was used, obtained in the second test example. FIG. 19 shows the results of studies on the correlation between an oxygen partial pressure and a surface carbon content in the case where the steel material D was used, obtained in the second test example. Note that it is empirically known that, in the case where the carburizing time is set to be longer than or equal to 15 hours, sufficient carburizing is able to be performed in the initial 3 hours when the surface carbon content is higher than or equal to 0.6% by mass. Then, when the surface carbon content is higher than or equal to 0.6% by mass, it was determined that "there is no inhibition of carburization"; whereas, when the surface carbon content is lower than 0.6% by mass, it was determined that "there is an inhibition of carburization".

It is understood from the results shown in FIG. 16, FIG. 17 and FIG. 19 that, when the steel material A, the steel material B and the steel material D are used, inhibition of carburization is suppressed by setting the oxygen partial pressure at 4.23×10⁻¹⁵ or above at the time of carburizing. Thus, although inexpensive steel materials are used, the rolling sliding members having excellent properties as shown in the results of the first test example (the steel material A in the third example, the steel material B in the first example, and the steel material D in the second example) are obtained.

On the other hand, it is understood from the results shown in FIG. 18 that, when the steel material C is used, inhibition of carburization is suppressed irrespective of the oxygen partial pressure at the time of carburizing. However, when the steel material C is used, the useful life and the toughness are insufficient as shown in the results of the first test example (fifth comparative example).

It is suggested from the above results that, with regard to a four-row tapered roller bearing device that serves as a rolling bearing, if the steel material that satisfies the above-described conditions is used and is subjected to heat treatment under the conditions that satisfy the heat treatment conditions in the method of manufacturing the rolling sliding member according to the invention, it is possible to manufacture a rolling sliding member that is able to ensure excellent corrosion resistance and crack resistance and sufficient life at low cost.

With the rolling sliding member, the method of manufacturing the same and the rolling bearing according to the invention, it is possible to obtain excellent advantageous effects, such as low manufacturing cost, excellent corrosion resistance and crack resistance, and sufficient useful life.

## Claims

1. A rolling sliding member (2a, 2b, 3a, 4) **characterized in that**:
the rolling sliding member (2a, 2b, 3a, 4) is made of a base material that is a steel material consisting of
0.16 to 0.19% of carbon by mass,
0.15 to 0.55% of silicon by mass,
0.20 to 1.55% of manganese by mass,
2.4 to 3.2% of chromium by mass,
0.01 to 0.2% of nickel by mass,
higher than or equal to 0.001% and lower than 0.1% of molybdenum by mass, and
the balance of less than or equal to 97.079% of iron by mass and incidental impurities,
and which has a hardenability index of higher than or equal to 5.4, the hardenability index being expressed by Formula (I):
X_{C}•X_{Si}•X_{Mn}•X_{Cr}•X_{Ni}•X_{Mo} (I)
wherein X_{C} is 0.5346 × carbon content (mass%) + 0.0004, X_{Si} is 0.7×silicon content (mass%), X_{Mn} when a manganese content is higher than or equal to 0.20% by mass and lower than 1.25% by mass is 3.3844 × manganese content (mass%) + 0.9826, X_{Mn} when a manganese content is higher than or equal to 1.25% by mass and lower than or equal to 1.55% by mass is 5.1 × manganese content (mass%) - 1.12, X_{Cr} is 2.1596 × chromium content (mass%) + 1.0003, X_{Ni} is 0.382 × nickel content (mass%) + 0.99, and X_{Mo} is 3 × molybdenum content (mass%) + 1, the base material being subjected to carburizing to achieve an effective case depth of 1.5 to 8 mm;
the rolling sliding member (2a, 2b, 3a, 4) has a rolling sliding surface that is in at least one of rolling contact and sliding contact relative to an opposed member; and
a carbon content in a surface layer in a range from a surface of the rolling sliding surface to a depth of 0.05 mm is 0.8 to 1.2% by mass, a Vickers hardness at a position at a depth of 0.1 mm from the surface of the rolling sliding surface is 700 to 840, an amount of retained austenite at a position at a depth of 0.1 mm from the surface of the rolling sliding surface is 20 to 40 % by volume, an area ratio of carbide at a position at a depth of 0.03 mm from the surface of the rolling sliding surface is 1.5 to 8 %, a Vickers hardness of the portion that is located at the center, in the axially longitudinal direction, of the portion at which the rolling sliding surface is formed and that is located at a center, in the thickness direction, of the portion at which the rolling sliding surface is formed is 300 to 510, and a martensitic transformation ratio of the portion that is located at the center, in the axially longitudinal direction, of the portion at which the rolling sliding surface is formed and that is located at the center, in the thickness direction, of the portion at which the rolling sliding surface is formed is 50 to 100 %.

2. A rolling bearing comprising:
an outer ring that has an inner peripheral surface on which a raceway portion is formed;
an inner ring that has an outer peripheral surface on which a raceway portion is formed; and
a plurality of rolling elements that are arranged between the raceway portion of the outer and the raceway portion of the inner ring, **characterized in that**
at least one of the outer ring, the inner ring and each of the rolling elements is the rolling sliding member (2a, 2b, 3a, 4) according to claim 1.

3. A method of manufacturing a rolling sliding member (2a, 2b, 3a, 4), **characterized by** comprising:
(A) a pre-stage machining step in which a semi-finished product (22) is obtained by machining, into a predetermined shape, a steel material consisting of
0.16 to 0.19% of carbon by mass,
0.15 to 0.55% of silicon by mass,
0.20 to 1.55% of manganese by mass,
2.4 to 3.2% of chromium by mass,
0.01 to 0.2% of nickel by mass,
higher than or equal to 0.001% and lower than 0.1% of molybdenum by mass, and
the balance of less than or equal to 97.079% of iron by mass and incidental impurities,
and which has a hardenability index of higher than or equal to 5.4, the hardenability index being expressed by Formula (I):
X_{C}•X_{Si}•X_{Mn}•X_{Cr}•X_{Ni}•X_{Mo} (I)
wherein X_{C} is 0.5346 × carbon content (mass%) + 0.0004, X_{Si} is 0.7×silicon content (mass%), X_{Mn} when a manganese content is higher than or equal to 0.20% by mass and lower than 1.25% by mass is 3.3844 × manganese content (mass%) + 0.9826, X_{Mn} when a manganese content is higher than or equal to 1.25% by mass and lower than or
equal to 1.55% by mass is 5.1 × manganese content (mass%) 1.12, X_{Cr} is 2.1596 × chromium content (mass%) + 1.0003, X_{Ni} is 0.382 × nickel content (mass%) + 0.99, and X_{Mo} is 3 × molybdenum content (mass%) + 1;
(B) a temperature increasing step in which the semi-finished product (22) obtained in the step (A) is set in a carburizing furnace, and the semi-finished product (22) is heated to 860°C while air is introduced into the carburizing furnace to keep an oxygen partial pressure of an atmosphere in the carburizing furnace at at least 3.0x10⁻¹⁵ Pa to increase a temperature of the semi-finished product (22);
(C) a carburizing step in which the semi-finished product (22) after the step (B) is heated at 930 to 990°C in a carburizing atmosphere having a carbon potential of 0.8 to 1.1 and is then rapidly quenched to a temperature of 850 to 900°C to obtain the semi-finished product (22) having an effective case depth of 1.5 to 8 mm;
(D) a process annealing step in which the semi-finished product (22) obtained in the step (C) is heated at 630 to 690°C;
(E) a quenching step in which the semi-finished product (22) after the step (D) is subjected to quenching at 820 to 850°C;
(F) a tempering step in which the semi-finished product (22) after the step (E) is subjected to tempering at 160 to 200°C; and
(G) a finishing step in which the semi-finished product (22) after the step (F) is subjected to finishing to form a rolling sliding surface, thereby obtaining a rolling sliding member (2a, 2b, 3a, 4) in which a carbon content in a surface layer in a range from a surface of the rolling sliding surface to a depth of 0.05 mm is 0.8 to 1.2% by mass, a Vickers hardness at a position at a depth of 0.1 mm from the surface is 700 to 840, an amount of retained austenite at a position at a depth of 0.1 mm from the surface is 20 to 40 % by volume, an area ratio of carbide at a position at a depth of 0.03 mm from the surface is 1.5 to 8 %, a Vickers hardness of a portion that is located at a center, in an axially longitudinal direction, of a portion at which the rolling sliding surface is formed and that is located at a center, in a thickness direction, of the portion at which the rolling sliding surface is formed is 300 to 510, and a martensitic transformation ratio of the portion that is located at the center, in the axially longitudinal direction, of the portion at which the rolling sliding surface is formed and that is located at the center, in the thickness direction, of the portion at which the rolling sliding surface is formed is 50 to 100 %.

4. The method according to claim 3, wherein
in the step (B), the semi-finished product (22) obtained in the step (A) is heated at a rate of temperature increase of 0.02 to 1°C/sec.

## Patentansprüche

1. Wälz-Gleitelement (2a, 2b, 3a, 4) **dadurch gekennzeichnet, dass**:
das Wälz-Gleitelement (2a, 2b, 3a, 4) hergestellt ist aus einem Basismaterial das ein Stahlmaterial ist bestehend aus
0,16 bis 0,19 Masse-% an Kohlenstoff,
0,15 bis 0,55 Masse-% an Silicium,
0,20 bis 1,55 Masse-% an Mangan,
2,4 bis 3,2 Masse-% an Chrom,
0,01 bis 0,2 Masse-% an Nickel,
gleich oder mehr als 0,001 Masse-% und weniger als 0,1 Masse-% an Molybdän, und
dem Rest von gleich oder weniger als 97,079 Masse-% an Eisen und zufälligen Verunreinigungen,
und das einen Härtbarkeitsindex von gleich oder größer als 5,4 aufweist, wobei der Härtbarkeitsindex angegeben wird mit der Formel (I):
X_{C}•X_{Si}•X_{Mn}•X_{Cr}•X_{Ni}•X_{Mo} (I)
wobei X_{C} gleich 0,5346 × Gehalt an Kohlenstoff (Masse-%) + 0,0004 ist, X_{Si} gleich 0,7x Gehalt an Silicium (Masse-%) ist, X_{Mn}, wenn der Gehalt an Mangan gleich oder größer als 0,20 Masse-% und geringer als 1,25 Masse-% ist, gleich 3,3844 × Gehalt an Mangan (Masse-%) + 0,9826 ist, X_{Mn}, wenn der Gehalt an Mangan gleich oder größer als 1,25 Masse-% und gleich oder geringer als 1,55 Masse-% ist, gleich 5,1 × Gehalt an Mangan (Masse-%) - 1,12 ist, X_{Cr} gleich 2,1596 × Gehalt an Chrom (Masse-%) + 1,0003 ist, X_{Ni} gleich 0,382 × Gehalt an Nickel (Masse-%) + 0,99 ist, und X_{Mo} gleich 3 × Gehalt an Molybdän (Masse-%) + 1 ist, wobei das Basismaterial zum Erzielen einer effektiven Einsatzhärtetiefe von 1,5 bis 8 mm einem Aufkohlen unterzogen wird;
das Wälz-Gleitelement (2a, 2b, 3a, 4) eine Wälz-Gleitoberfläche aufweist, die in mindestens einem von einem Wälzkontakt und einem Gleitkontakt mit einem Gegenelement steht; und
ein Gehalt an Kohlenstoff in einer Oberflächenschicht in einem Bereich von einer Oberfläche der Wälz-Gleitoberfläche bis zu einer Tiefe von 0,05 mm gleich 0,8 bis 1,2 Masse-% ist, eine Vickers-Härte an einer Stelle bei einer Tiefe von 0,1 mm von der Oberfläche der Wälz-Gleitoberfläche gleich 700 bis 840 ist, eine Menge an beibehaltenem Austenit an einer Stelle bei einer Tiefe von 0,1 mm von der Oberfläche der Wälz-Gleitoberfläche gleich 20 bis 40 Volumen-% ist, ein Flächenverhältnis von Carbid an einer Stelle bei einer Tiefe von 0,03 mm von der Oberfläche der Wälz-Gleitoberfläche gleich 1,5 bis 8 % ist, eine Vickers-Härte des Bereichs, der im Zentrum liegt, in der axialen Längsrichtung, des Bereichs an dem die Wälz-Gleitoberfläche ausgebildet ist und der in einem Zentrum liegt, in der Dickenrichtung, des Bereichs an dem die Wälz-Gleitoberfläche ausgebildet ist gleich 300 bis 510 ist, und ein martensitisches Transformationsverhältnis des Bereichs, der im Zentrum liegt, in der axialen Längsrichtung, des Bereichs an dem die Wälz-Gleitoberfläche ausgebildet ist und der im Zentrum liegt, in der Dickenrichtung, des Bereichs an dem die Wälz-Gleitoberfläche ausgebildet ist gleich 50 bis 100 % ist.

2. Wälzlager, das umfasst:
einen äußeren Ring, der eine innere Umfangsfläche aufweist auf welcher ein Laufbahnabschnitt ausgebildet ist;
einen inneren Ring, der eine äußere Umfangsfläche aufweist, auf welcher ein Laufbahnabschnitt ausgebildet ist; und
eine Vielzahl an Wälzelementen, die zwischen dem Laufbahnabschnitt des äußeren und dem Laufbahnabschnitt des inneren Rings angeordnet sind, **dadurch gekennzeichnet, dass**
mindestens eines von dem äußeren Ring, dem inneren Ring und jedem der Wälzelemente das Wälz-Gleitelement (2a, 2b, 3a, 4) gemäß Anspruch 1 ist.

3. Verfahren zur Herstellung eines Wälz-Gleitelements (2a, 2b, 3a, 4), **dadurch gekennzeichnet, dass** es umfasst:
(A) einen Vorbearbeitungsschritt in welchem ein Halbfabrikat (22) erhalten wird durch maschinelles Bearbeiten eines Stahlmaterial zu einer vorbestimmten Gestalt, wobei das Stahlmaterial besteht aus
0,16 bis 0,19 Masse-% an Kohlenstoff,
0,15 bis 0,55 Masse-% an Silicium,
0,20 bis 1,55 Masse-% an Mangan,
2,4 bis 3,2 Masse-% an Chrom,
0,01 bis 0,2 Masse-% an Nickel,
gleich oder mehr als 0,001 Masse-% und weniger als 0,1 Masse-% an Molybdän, und
dem Rest von gleich oder weniger als 97,079 Masse-% an Eisen und zufälligen Verunreinigungen,
und das einen Härtbarkeitsindex von gleich oder größer als 5,4 aufweist, wobei der Härtbarkeitsindex angegeben wird mit der Formel (I):
X_{C}•X_{Si}•X_{Mn}•X_{Cr}•X_{Ni}•X_{Mo} (I)
wobei X_{C} gleich 0,5346 × Gehalt an Kohlenstoff (Masse-%) + 0,0004 ist, X_{Si} gleich 0,7x Gehalt an Silicium (Masse-%) ist, X_{Mn}, wenn der Gehalt an Mangan gleich oder größer als 0,20 Masse-% und geringer als 1,25 Masse-% ist, gleich 3,3844 × Gehalt an Mangan (Masse-%) + 0,9826 ist, X_{Mn}, wenn der Gehalt an Mangan gleich oder größer als 1,25 Masse-% und gleich oder geringer als 1,55 Masse-% ist, gleich 5,1 × Gehalt an Mangan (Masse-%) - 1,12 ist, X_{Cr} gleich 2,1596 × Gehalt an Chrom (Masse-%) + 1,0003 ist, X_{Ni} gleich 0,382 × Gehalt an Nickel (Masse-%) + 0,99 ist, und X_{Mo} gleich 3 × Gehalt an Molybdän (Masse-%) + 1 ist;
(B) einen Temperaturerhöhungsschritt in welchem das im Schritt (A) erhaltene Halbfabrikat (22) in einen Aufkohlungsofen gegeben und das Halbfabrikat (22) auf 860°C erwärmt wird während Luft in den Aufkohlungsofen geleitet wird, um den Sauerstoffpartialdruck der Atmosphäre im Aufkohlungsofen auf mindestens 3,0×10⁻¹⁵Pa zu halten, um die Temperatur des Halbfabrikats (22) zu erhöhen;
(C) einen Aufkohlungsschritt in welchem das Halbfabrikat (22) nach dem Schritt (B) in einer Aufkohlungsatmosphäre mit einem Kohlenstoffpotential von 0,8 bis 1,1 auf 930 bis 990°C erwärmt und dann auf eine Temperatur von 850 bis 900°C schnell abgekühlt wird, um das Halbfabrikat (22) mit einer effektiven Einsatzhärtetiefe von 1,5 bis 8 mm zu erhalten;
(D) einen Verfahrensschritt des Temperns in welchem das in Schritt (C) erhaltene Halbfabrikat (22) auf 630 bis 690°C erwärmt wird;
(E) einem Abkühlschritt in welchem das Halbfabrikat (22) nach dem Schritt (D) einem Abkühlen auf 820 bis 850°C unterzogen wird;
(F) einem Termperschritt in welchem das Halbfabrikat (22) nach dem Schritt (E) einem Tempern bei 160 bis 200°C unterzogen wird; und
(G) einem Endbearbeitungsschritt in welchem das Halbfabrikat (22) nach dem Schritt (F) einer Endbearbeitung unterzogen wird, um eine Wälz-Gleitoberfläche auszubilden, wodurch ein Wälz-Gleitelement (2a, 2b, 3a, 4) erhalten wird, in dem ein Gehalt an Kohlenstoff in einer Oberflächenschicht in einem Bereich von einer Oberfläche der Wälz-Gleitoberfläche bis zu einer Tiefe von 0,05 mm gleich 0,8 bis 1,2 Masse-% ist, eine Vickers-Härte an einer Stelle bei einer Tiefe von 0,1 mm von der Oberfläche der Wälz-Gleitoberfläche gleich 700 bis 840 ist, eine Menge an beibehaltenem Austenit an einer Stelle bei einer Tiefe von 0,1 mm von der Oberfläche der Wälz-Gleitoberfläche gleich 20 bis 40 Volumen-% ist, ein Flächenverhältnis von Carbid an einer Stelle bei einer Tiefe von 0,03 mm von der Oberfläche gleich 1,5 bis 8 % ist, eine Vickers-Härte eines Bereichs, der in einem Zentrum liegt, in einer axialen Längsrichtung, eines Bereichs an dem die Wälz-Gleitoberfläche ausgebildet ist und der in einem Zentrum liegt, in einer Dickenrichtung, des Bereichs an dem die Wälz-Gleitoberfläche ausgebildet ist gleich 300 bis 510 ist, und ein martensitisches Transformationsverhältnis des Bereichs, der im Zentrum liegt, in der axialen Längsrichtung, des Bereichs an dem die Wälz-Gleitoberfläche ausgebildet ist und der im Zentrum liegt, in der Dickenrichtung, des Bereichs an dem die Wälz-Gleitoberfläche ausgebildet ist gleich 50 bis 100 % ist.

4. Verfahren nach Anspruch 3, wobei
in dem Schritt (B) das im Schritt (A) erhaltene Halbfabrikat (22) mit einer Rate der Temperaturerhöhung von 0,02 bis 1°C/s erwärmt wird.

## Revendications

1. Elément de roulement coulissant (2a, 2b, 3a, 4), **caractérisé en ce que** :
l'élément de roulement coulissant (2a, 2b, 3a, 4) est réalisé avec un matériau de base qui est un matériau en acier se composant de :
de 0,16 à 0,19 % en poids de carbone,
de 0,15 à 0,55 % en poids de silicium,
de 0,20 à 1,55 % en poids de manganèse,
de 2,4 à 3,2 % en poids de chrome,
de 0,01 à 0,2 % en poids de nickel,
une valeur supérieure ou égale à 0,001 % et inférieure à 0,1 % en poids de molybdène, et
le reste représentant une valeur inférieure ou égale à 97,079 % en poids de fer et les impuretés inévitables,
et qui a un indice d'aptitude à la trempe supérieur ou égal à 5,4, l'indice d'aptitude à la trempe étant exprimé par la formule (I) :
X_{C}•X_{Si}•X_{Mn}•X_{Cr}•X_{Ni}•X_{Mo} (I)
où X_{C} est 0,5346 × teneur en carbone (% en poids) + 0, 0004, X_{Si} est 0,7 × teneur en silicium (% en poids), X_{Mn}, lorsqu'une teneur en manganèse est supérieure ou égale à 0,20 % en poids et inférieure à 1,25 % en poids, est 3,3844 × teneur en manganèse (% en poids) + 0,9826, X_{Mn}, lorsqu'une teneur en manganèse est supérieure ou égale à 1,25 % en poids et inférieure ou égale à 1,55 % en poids, est 5,1 × teneur en manganèse (% en poids) - 1,12, X_{Cr} est 2,1596 × teneur en chrome (% en poids) + 1,0003, X_{Ni} est 0,382 × teneur en nickel (% en poids) + 0,99, et X_{Mo} est 3 × teneur en molybdène (% en poids) + 1, le matériau de base étant soumis à la carburation pour obtenir une profondeur de cémentation effective de 1,5 à 8 mm ;
l'élément de roulement coulissant (2a, 2b, 3a, 4) a une surface de roulement coulissante qui est dans au moins l'un parmi le contact roulant et le contact coulissant par rapport à un élément opposé ; et
une teneur en carbone dans une couche de surface dans une plage allant d'une surface de la surface de roulement coulissante à une profondeur de 0,05 mm est de 0,8 à 1,2 % en poids, une dureté Vickers dans une position à une profondeur de 0,1 mm de la surface de la surface de roulement coulissante est de 700 à 840, une quantité d'austénite retenue dans une position à une profondeur de 0,1 mm de la surface de la surface de roulement coulissante est de 20 à 40 % en volume, un rapport de section de carbure dans une position à une profondeur de 0,03 mm de la surface de la surface de roulement coulissante est de 1,5 à 8 %, une dureté Vickers de la partie qui est positionnée au centre, dans la direction axialement longitudinale, de la partie sur laquelle la surface de roulement coulissante est formée et qui est positionnée au niveau d'un centre dans le sens de l'épaisseur, de la partie sur laquelle la surface de roulement coulissante est formée, est de 300 à 510, et un rapport de transformation martensitique de la partie qui est positionnée au centre, dans la direction axialement longitudinale, de la partie sur laquelle la surface de roulement coulissante est formée et qui est positionnée au niveau du centre, dans le sens de l'épaisseur, de la partie sur laquelle la surface de roulement coulissante est formée, est de 50 à 100 %.

2. Palier de roulement comprenant :
une bague externe qui a une surface périphérique interne sur laquelle une partie de chemin de roulement est formée ;
une bague interne qui a une surface périphérique externe sur laquelle une partie de chemin de roulement est formée ; et
une pluralité d'éléments de roulement qui sont agencés entre la partie de chemin de roulement de la bague externe et la partie de chemin de roulement de la bague interne, **caractérisé en ce que**
au moins l'une parmi la bague externe, la bague interne et chacun des éléments de roulement est l'élément de roulement coulissant (2a, 2b, 3a, 4) selon la revendication 1.

3. Procédé pour fabriquer un élément de roulement coulissant (2a, 2b, 3a, 4), **caractérisé en ce qu'**il comprend :
(A) une étape d'usinage d'étage préliminaire dans laquelle uin produit semi-fini (22) est obtenu en usinant, dans une forme prédéterminée, un matériau en acier se composant :
de 0,16 à 0,19 % en poids de carbone,
de 0,15 à 0,55 % en poids de silicium,
de 0,20 à 1,55 % en poids de manganèse,
de 2,4 à 3,2 % en poids de chrome,
de 0,01 à 0,2 % en poids de nickel,
une valeur supérieure ou égale à 0,001 % et inférieure à 0,1 % en poids de molybdène, et
le reste représentant une valeur inférieure ou égale à 97,079 % en poids de fer et les impuretés inévitables,
et qui a un indice d'aptitude à la trempe supérieur ou égal à 5,4, l'indice d'aptitude à la trempe étant exprimé par la formule (I) :
X_{C}•X_{Si}•X_{Mn}•X_{Cr}•X_{Ni}•X_{Mo} (I)
où X_{C} est 0,5346 × teneur en carbone (% en poids) + 0, 0004, X_{Si} est 0,7 × teneur en silicium (% en poids), X_{Mn}, lorsqu'une teneur en manganèse est supérieure ou égale à 0,20 % en poids et inférieure à 1,25 % en poids, est 3,3844 × teneur en manganèse (% en poids) + 0,9826, X_{Mn}, lorsqu'une teneur en manganèse est supérieure ou égale à 1,25 % en poids et inférieure ou égale à 1,55 % en poids, est 5,1 × teneur en manganèse (% en poids) - 1,12, X_{Cr} est 2, 1596 × teneur en chrome (% en poids) + 1,0003, X_{Ni} est 0,382 × teneur en nickel (% en poids) + 0,99, et X_{Mo} est 3 × teneur en molybdène (% en poids) + 1,
(B) une étape de montée en température dans laquelle le produit semi-fini (22) obtenu à l'étape (A) est placé dans un four de carburation, et le produit semi-fini (22) est chauffé à 860 °C alors que l'air est introduit dans le four de carburation pour maintenir une pression partielle d'oxygène d'une atmosphère dans le four de carburation à au moins 3,0 × 10⁻¹⁵ Pa pour faire monter une température du produit semi-fini (22) ;
(C) une étape de carburation dans laquelle le produit semi-fini (22) après l'étape (B) est chauffé à une température de 930 à 990 °C dans une atmosphère de carburation ayant un potentiel de carbone de 0,8 à 1,1 et est ensuite rapidement trempé à une température de 850 à 900 °C afin d'obtenir le produit semi-fini (22) ayant une profondeur de cémentation effective de 1,5 à 8 mm ;
(D) une étape de recuit de traitement dans laquelle le produit semi-fini (22) obtenu à l'étape (C) est chauffé à une température de 630 à 690 °C ;
(E) une étape de trempe dans laquelle le produit semi-fini (22) après l'étape (D) est soumis à la trempe à une température de 820 à 850 °C ;
(F) une étape de revenu dans laquelle le produit semi-fini (22) après l'étape (E) est soumis au revenu à une température de 160 à 200 °C ; et
(G) une étape de finition dans laquelle le produit semi-fini (22) après l'étape (F) est soumis à la finition pour former une surface de roulement coulissante, obtenant ainsi un élément de roulement coulissant (2a, 2b, 3a, 4) dans lequel une teneur de carbone dans une couche de surface dans une plage allant d'une surface de la surface de roulement coulissante à une profondeur de 0,05 mm est de 0,8 à 1,2 % en poids, une dureté Vickers dans une position à une profondeur de 0,1 mm de la surface est de 700 à 840, une quantité d'austénite retenue dans une position à une profondeur de 0,1 mm de la surface est de 20 à 40 % en volume, un rapport de section de carbure dans une position à une profondeur de 0,03 mm de la surface est de 1,5 à 8 %, une dureté Vickers d'une partie qui est positionnée au niveau d'un centre, dans une direction axialement longitudinale, d'une partie sur laquelle la surface de roulement coulissante est formée et qui est positionnée au niveau d'un centre, dans le sens de l'épaisseur, de la partie sur laquelle la surface de roulement coulissante est formée, est de 300 à 510, et un rapport de transformation martensitique de la partie qui est positionnée au niveau du centre, dans la direction axialement longitudinale, de la partie sur laquelle la surface de roulement coulissante est formée et qui est positionnée au niveau du centre, dans le sens de l'épaisseur, de la partie sur laquelle la surface de roulement coulissante est formée, est de 50 à 100 %.

4. Procédé selon la revendication 3, dans lequel
à l'étape (B), le produit semi-fini (22) obtenu à l'étape (A) est chauffé à une vitesse de montée en température de 0,02 à 1 °C/seconde.
